# EUROPEAN PATENT APPLICATION

(11) **EP 3 214 593 A1**
(43) Date of publication of application: **06.09.2017**
(21) Application number: 15863445.1
(22) Date of filing: 24.11.2015
(51) Int. Cl.: G06Q 20/34

(54) **CONTACTLESS PAYMENT METHOD, DEVICE AND SYSTEM**

(30) Priority: 26.11.2014 CN 201410696938
(71) Applicant: Huawei Technologies Co., Ltd., Longgang District Shenzhen, Guangdong 518129 (CN)
(72) Inventor: MEI, Jingqing, Shenzhen Guangdong 518129 (CN)
(74) Representative: Goddar, Heinz J.
(86) International application number: PCT/CN2015/095472
(87) International publication number: WO 2016/082751

(57) **Abstract**

Embodiments of the present invention disclose a contactless payment method, apparatus, and system, and belong to the communications field. The method includes: obtaining a payment amount of a transaction; determining, from limit intervals corresponding to at least two default contactless payment applications, a limit interval within which the payment amount falls; obtaining an application identifier of a first default payment application, where the first default payment application is a default contactless payment application corresponding to the limit interval within which the payment amount falls; and sending the application identifier of the first default payment application to a collection terminal, so that the collection terminal completes the transaction with the payment terminal by using the payment application corresponding to the application identifier. In the present invention, problems of a complex payment process and relatively low payment efficiency are resolved, and effects of simplifying a payment process and improving payment efficiency are achieved. The present invention is applied to payment of a contactless payment application.

## Description

This application claims priority to Chinese Patent Application No. 201410696938.1, filed with the Chinese Patent Office on November 26, 2014 and entitled "CONTACTLESS PAYMENT METHOD, APPARATUS, AND SYSTEM", which is incorporated herein by reference in its entirety.

### TECHNICAL FIELD

The present invention relates to the communications field, and in particular, to a contactless payment method, apparatus, and system.

### BACKGROUND

Contactless payment is a proximity payment manner in which a bank card or a payment terminal directly generates a radio signal connection to a collection terminal, and the collection terminal deals with a payment transaction according to account information of the bank card or the payment terminal. A contactless payment application is an application installed on a payment terminal, and is used to complete a payment transaction. A contactless payment application on a payment terminal may generally simulate a bank card, and different contactless payment applications may simulate different bank cards. A contactless point of sale (Point Of Sale, POS for short) machine can implement an automatic fund transfer by using a network. When a payment terminal on which a contactless payment application is installed approaches a surface of a contactless POS machine, the payment terminal can complete a payment action with the contactless POS machine by means of radio wave transfer.

In the prior art, a payment terminal on which a contactless payment application is installed may link to the contactless payment application by using a tap & pay (tap and pay) function. An existing payment terminal supports only one default contactless payment application, and when performing a payment action, the payment terminal simulates, by using the default contactless payment application, a bank card corresponding to the contactless payment application, so as to perform fund payment. Payable limits are different for bank cards corresponding to different contactless payment applications. If a bank card corresponding to a default contactless payment application that is set by a user is a bank card with a higher payable limit, such as a credit card, a password and a signature need to be entered into a contactless POS machine during payment. If a bank card corresponding to a default contactless payment application that is set by a user is a bank card with a lower payable limit, such as an electronic cash card, a password and a signature do not need to be entered into a contactless POS machine during payment.

In the prior art, only one default contactless payment application can be set in a payment terminal, for transaction convenience, an electronic cash card with a lower payable limit is generally set to a default contactless application, and when money that needs to be paid exceeds a corresponding payable limit, a user needs to reselect a contactless payment application with a higher payable limit for a transaction. Therefore, a payment process is complex and payment efficiency is relatively low.

### SUMMARY

To resolve problems of a complex payment process and relatively low payment efficiency, the present invention provides a contactless payment method, apparatus, and system. The technical solutions are as follows:

According to a first aspect, a contactless payment method is provided and applied to a payment terminal, where there are at least two default contactless payment applications on the payment terminal, each default contactless payment application is corresponding to one limit interval, and the method includes:
obtaining a payment amount of a transaction;
determining, from at least two consecutive and non-overlapping limit intervals corresponding to the at least two default contactless payment applications, a limit interval within which the payment amount falls;
obtaining an application identifier of a first default payment application, where the first default payment application is a default contactless payment application corresponding to the limit interval within which the payment amount falls; and
sending the application identifier of the first default payment application to a collection terminal, so that the collection terminal completes the transaction with the payment terminal by using the payment application corresponding to the application identifier.

With reference to the first aspect, in a first implementable manner, the at least two default contactless payment applications are sequentially arranged in a payable-limit-based order or a priority-based order, and before the obtaining a payment amount of a transaction, the method further includes:
selecting, from contactless payment applications on the payment terminal, at least two contactless payment applications as the at least two default contactless payment applications;
obtaining at least one demarcation limit value; and
obtaining, according to the at least one demarcation limit value and an arrangement order of the at least two default contactless payment applications, the limit intervals corresponding to the at least two default contactless payment applications.

With reference to the first implementable manner, in a second implementable manner,
the obtaining the at least one demarcation limit value includes:
obtaining at least one preset demarcation limit value as the at least one demarcation limit value; or
receiving, as the at least one demarcation limit value, at least one demarcation limit value that is set by a user; or
obtaining an actual payable limit of at least one default contactless payment application of the at least two default contactless payment applications as the at least one demarcation limit value.

With reference to any implementable manner of the first aspect, the first implementable manner, or the second implementable manner, in a third implementable manner, there is a first membership card application on the payment terminal, and the obtaining a payment amount of a transaction includes:
sending the first membership card information to the collection terminal, so that the collection terminal queries a preset relationship between a membership card application and membership card information according to the first membership card information, to obtain the first membership card application corresponding to the first membership card information, and sends the payment amount to the first membership card application; and
obtaining the payment amount from the first membership card application.

With reference to any implementable manner of the first aspect, the first implementable manner, or the second implementable manner, in a fourth implementable manner, there are two default contactless payment applications on the payment terminal, each default contactless payment application is corresponding to one limit interval, two limit intervals corresponding to the two default contactless payment applications are consecutive and non-overlapping, the two limit intervals corresponding to the two default contactless payment applications are obtained by means of dividing by using a first demarcation limit value, and there is a second membership card application on the payment terminal; and
the obtaining a payment amount of a transaction includes:
sending second membership card information and the first demarcation limit value to the collection terminal, so that the collection terminal accumulates bill amounts of the user according to the second membership card information; queries a preset relationship between a membership card application and membership card information when an accumulated amount is greater than the first demarcation limit value, to obtain the second membership card application corresponding to the second membership card information; and sends the accumulated amount to the second membership card application by using the accumulated amount as the payment amount; and
obtaining the payment amount from the second membership card application.

With reference to the first aspect, the first implementable manner, and the second implementable manner, in a fifth implementable manner, the obtaining a payment amount of a transaction includes:
receiving, by using a next generation system environment NGSE message, the payment amount sent by the collection terminal; or
receiving, by using a Near Field Communication NFC message, the payment amount sent by the collection terminal.

With reference to any implementable manner of the first aspect, the first to the fifth implementable manner of the first aspect, in a sixth implementable manner, before the sending the application identifier of the first default payment application to a collection terminal, the method further includes:
configuring application identifiers of the at least two default contactless payment applications to be in a proximity payment system environment PPSE; or
configuring the application identifier of the first default payment application to be in the PPSE.

According to a second aspect, a contactless payment method is provided and applied to a collection terminal, where the method includes:
sending a payment amount to a payment terminal;
receiving an application identifier that is of a first default payment application and sent by the payment terminal, where there are at least two default contactless payment applications on the payment terminal, each default contactless payment application is corresponding to one limit interval, at least two limit intervals corresponding to the at least two default contactless payment applications are consecutive and non-overlapping, and the first default payment application is obtained by determining, by the payment terminal after obtaining the payment amount of a transaction, a default contactless payment application corresponding to a limit interval within which the payment amount falls; and
completing the transaction with the payment terminal by using the payment application corresponding to the application identifier.

With reference to the second aspect, in a first implementable manner, there is a first membership card application on the payment terminal, and the sending a payment amount to a payment terminal includes:
receiving first membership card information sent by the payment terminal;
querying a preset relationship between a membership card application and membership card information according to the first membership card information, to obtain the first membership card application corresponding to the first membership card information; and
sending the payment amount to the first membership card application on the payment terminal, so that the payment terminal obtains the payment amount from the first membership card application.

With reference to the first implementable manner, in a second implementable manner, there are two default contactless payment applications on the payment terminal, each default contactless payment application is corresponding to one limit interval, two limit intervals corresponding to the two default contactless payment applications are consecutive and non-overlapping, the two limit intervals corresponding to the two default contactless payment applications are obtained by means of dividing by using a first demarcation limit value, and there is a second membership card application on the payment terminal; and
the sending a payment amount to a payment terminal includes:
receiving second membership card information and the first demarcation limit value that are sent by the payment terminal;
querying a preset relationship between a membership card application and membership card information when an accumulated amount is greater than the first demarcation limit value, to obtain the second membership card application corresponding to the second membership card information; and
sending the accumulated amount to the second membership card application on the payment terminal by using the accumulated amount as the payment amount, so that the payment terminal obtains the payment amount from the second membership card application.

With reference to the second aspect, in a third implementable manner, the sending a payment amount to a payment terminal includes:
sending the payment amount to the payment terminal by using a next generation system environment NGSE message; or
sending the payment amount to the payment terminal by using a Near Field Communication NFC message.

According to a third aspect, a contactless payment method is provided and applied to a collection terminal, where the method includes:
obtaining a payment amount of a transaction;
receiving application identifiers that are of at least two default contactless payment applications and sent by a payment terminal, where there are the at least two default contactless payment applications on the payment terminal, each default contactless payment application is corresponding to one limit interval, and limit intervals corresponding to the at least two default contactless payment applications are consecutive and non-overlapping;
obtaining an application identifier of a first default payment application according to the application identifiers of the at least two default contactless payment applications, where the first default payment application is a default contactless payment application corresponding to a limit interval within which the payment amount falls; and
completing the transaction with the payment terminal by using the payment application corresponding to the application identifier.

With reference to the third aspect, in a first implementable manner, the obtaining an application identifier of a first default payment application according to the application identifiers of the at least two default contactless payment applications includes:
obtaining the limit intervals corresponding to the at least two default contactless payment applications; and
using, as the application identifier of the first default payment application according to a preset correspondence between an application identifier of a contactless payment application and a limit interval, an application identifier of the default contactless payment application corresponding to the limit interval within which the payment amount falls.

With reference to the third aspect, in a second implementable manner, the obtaining an application identifier of a first default payment application according to the application identifiers of the at least two default contactless payment applications includes:
determining, according to the application identifiers of the at least two default contactless payment applications, bank card types corresponding to the at least two default contactless payment applications;
determining, according to a preset correspondence between a bank card type and a limit interval, a bank card type corresponding to the limit interval within which the payment amount falls; and
using an application identifier corresponding to the determined bank card type as the application identifier of the first default payment application according to the determined bank card type.

According to a fourth aspect, a contactless payment apparatus is provided and applied to a payment terminal, where there are at least two default contactless payment applications on the payment terminal, each default contactless payment application is corresponding to one limit interval, and the contactless payment apparatus includes:
a first obtaining unit, configured to obtain a payment amount of a transaction;
a determining unit, configured to determine, from at least two consecutive and non-overlapping limit intervals corresponding to the at least two default contactless payment applications, a limit interval within which the payment amount falls;
a second obtaining unit, configured to obtain an application identifier of a first default payment application, where the first default payment application is a default contactless payment application corresponding to the limit interval within which the payment amount falls; and
a sending unit, configured to send the application identifier of the first default payment application to a collection terminal, so that the collection terminal completes the transaction with the payment terminal by using the payment application corresponding to the application identifier.

With reference to the fourth aspect, in a first implementable manner, the at least two default contactless payment applications are sequentially arranged in a payable-limit-based order or a priority-based order, and the contactless payment apparatus further includes:
a selection unit, configured to select, from contactless payment applications on the payment terminal, at least two contactless payment applications as the at least two default contactless payment applications;
a third obtaining unit, configured to obtain at least one demarcation limit value; and
a processing unit, configured to obtain, according to the at least one demarcation limit value and an arrangement order of the at least two default contactless payment applications, the limit intervals corresponding to the at least two default contactless payment applications.

With reference to the first implementable manner, in a second implementable manner,
the third obtaining unit is specifically configured to:
obtain at least one preset demarcation limit value as the at least one demarcation limit value; or
receive, as the at least one demarcation limit value, at least one demarcation limit value that is set by a user; or
obtain an actual payable limit of at least one default contactless payment application of the at least two default contactless payment applications as the at least one demarcation limit value.

With reference to any implementable manner of the fourth aspect, the first implementable manner, or the second implementable manner, in a third implementable manner, there is a first membership card application on the payment terminal, and the first obtaining unit includes:
a first sending module, configured to send the first membership card information to the collection terminal, so that the collection terminal queries a preset relationship between a membership card application and membership card information according to the first membership card information, to obtain the first membership card application corresponding to the first membership card information, and sends the payment amount to the first membership card application; and
a first obtaining module, configured to obtain the payment amount from the first membership card application.

With reference to any implementable manner of the fourth aspect, the first implementable manner, or the second implementable manner, in a fourth implementable manner, there are two default contactless payment applications on the payment terminal, each default contactless payment application is corresponding to one limit interval, two limit intervals corresponding to the two default contactless payment applications are consecutive and non-overlapping, the two limit intervals corresponding to the two default contactless payment applications are obtained by means of dividing by using a first demarcation limit value, and there is a second membership card application on the payment terminal; and
the first obtaining unit includes:
a second sending module, configured to send second membership card information and the first demarcation limit value to the collection terminal, so that the collection terminal accumulates bill amounts of the user according to the second membership card information; queries a preset relationship between a membership card application and membership card information when an accumulated amount is greater than the first demarcation limit value, to obtain the second membership card application corresponding to the second membership card information; and sends the accumulated amount to the second membership card application by using the accumulated amount as the payment amount; and
a second obtaining module, configured to obtain the payment amount from the second membership card application.

With reference to any implementable manner of the fourth aspect, the first implementable manner, or the second implementable manner, in a fifth implementable manner, the first obtaining unit includes:
a first receiving module, configured to: receive, by using a next generation system environment NGSE message, the payment amount sent by the collection terminal; or
receive, by using a Near Field Communication NFC message, the payment amount sent by the collection terminal.

With reference to the fourth aspect, in a sixth implementable manner, the contactless payment apparatus further includes:
a configuration unit, configured to: configure application identifiers of the at least two default contactless payment applications to be in a proximity payment system environment PPSE; or
configure the application identifier of the first default payment application to be in the PPSE.

According to a fifth aspect, a contactless payment apparatus is provided and applied to a collection terminal, where the contactless payment apparatus includes:
a sending unit, configured to send a payment amount to a payment terminal;
a receiving unit, configured to receive an application identifier that is of a first default payment application and sent by the payment terminal, where there are at least two default contactless payment applications on the payment terminal, each default contactless payment application is corresponding to one limit interval, at least two limit intervals corresponding to the at least two default contactless payment applications are consecutive and non-overlapping, and the first default payment application is obtained by determining, by the payment terminal after obtaining the payment amount of a transaction, a default contactless payment application corresponding to a limit interval within which the payment amount falls; and
a transaction unit, configured to complete the transaction with the payment terminal by using the payment application corresponding to the application identifier.

With reference to the fifth aspect, in a first implementable manner, the sending unit includes:
a first receiving module, configured to receive first membership card information sent by the payment terminal;
a first query module, configured to query a preset relationship between a membership card application and membership card information according to the first membership card information, to obtain a first membership card application corresponding to the first membership card information; and
a first sending module, configured to send the payment amount to the first membership card application on the payment terminal, so that the payment terminal obtains the payment amount from the first membership card application.

With reference to the fifth aspect, in a second implementable manner, there are two default contactless payment applications on the payment terminal, each default contactless payment application is corresponding to one limit interval, two limit intervals corresponding to the two default contactless payment applications are consecutive and non-overlapping, the two limit intervals corresponding to the two default contactless payment applications are obtained by means of dividing by using a first demarcation limit value, and there is a second membership card application on the payment terminal; and
the sending unit includes:
a second receiving module, configured to receive second membership card information and the first demarcation limit value that are sent by the payment terminal;
a second query module, configured to query a preset relationship between a membership card application and membership card information when an accumulated amount is greater than the first demarcation limit value, to obtain the second membership card application corresponding to the second membership card information; and
a second sending module, configured to send the accumulated amount to the second membership card application on the payment terminal by using the accumulated amount as the payment amount, so that the payment terminal obtains the payment amount from the second membership card application.

With reference to any implementable manner of the fifth aspect, or the first implementable manner or the second implementable manner of the fifth aspect, in a third implementable manner, the sending unit includes:
a third sending module, configured to: send the payment amount to the payment terminal by using a next generation system environment NGSE message; or
send the payment amount to the payment terminal by using a Near Field Communication NFC message.

According to a sixth aspect, a contactless payment apparatus is provided and applied to a collection terminal, where the contactless payment apparatus includes:
a first obtaining unit, configured to obtain a payment amount of a transaction;
a receiving unit, configured to receive application identifiers that are of at least two default contactless payment applications and sent by a payment terminal, where there are the at least two default contactless payment applications on the payment terminal, each default contactless payment application is corresponding to one limit interval, and limit intervals corresponding to the at least two default contactless payment applications are consecutive and non-overlapping;
a second obtaining unit, configured to obtain an application identifier of a first default payment application according to the application identifiers of the at least two default contactless payment applications, where the first default payment application is a default contactless payment application corresponding to a limit interval within which the payment amount falls; and
a transaction unit, configured to complete the transaction with the payment terminal by using the payment application corresponding to the application identifier.

With reference to the sixth aspect, in a first implementable manner, the second obtaining unit includes:
an obtaining module, configured to obtain the limit intervals corresponding to the at least two default contactless payment applications; and
a first using module, configured to use, as the application identifier of the first default payment application according to a preset correspondence between an application identifier of a contactless payment application and a limit interval, an application identifier of the default contactless payment application corresponding to the limit interval within which the payment amount falls.

With reference to the sixth aspect, in a second implementable manner, the second obtaining unit includes:
a first determining module, configured to determine, according to the application identifiers of the at least two default contactless payment applications, bank card types corresponding to the at least two default contactless payment applications;
a second determining module, configured to determine, according to a preset correspondence between a bank card type and a limit interval, a bank card type corresponding to the limit interval within which the payment amount falls; and
a second using module, configured to use an application identifier corresponding to the determined bank card type as the application identifier of the first default payment application according to the determined bank card type.

According to a seventh aspect provides, a contactless payment system is provided, where the contactless payment system includes a payment terminal and a collection terminal;
the payment terminal includes the contactless payment apparatus according to any implementable manner of the fourth aspect, or the first to the sixth implementable manners of the fourth aspect; and
the collection terminal includes the contactless payment apparatus according to any implementable manner of the fifth aspect, or the first to the third implementable manners.

According to an eighth aspect, a contactless payment system, where the contactless payment system includes a payment terminal and a collection terminal; and
the collection terminal includes the contactless payment apparatus according to any implementable manner of the sixth aspect, the first implementable manner, or the second implementable manner.

The technical solutions provided in the present invention bring the following beneficial effects:

According to the contactless payment method, apparatus, and system provided in the present invention, there are at least two default contactless payment applications in a payment terminal, each default contactless payment application is corresponding to one limit interval, and a limit interval within which a payment amount falls and a default contactless payment application corresponding to the limit interval are selected according to the payment amount of a transaction, so as to perform a corresponding payment action. A contactless application of a corresponding limit interval can be selected according to a transaction amount, and a user does not need to reset a default contactless payment application, thereby simplifying a payment process and improving payment efficiency.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a method flowchart of a contactless payment method according to an embodiment of the present invention;
FIG. 2 is a method flowchart of another contactless payment method according to an embodiment of the present invention;
FIG. 3 is a method flowchart of still another contactless payment method according to an embodiment of the present invention;
FIG. 4 is a method flowchart of yet another contactless payment method according to an embodiment of the present invention;
FIG. 5 is a flowchart of a limit interval obtaining method according to an embodiment of the present invention;
FIG. 6 is a method flowchart of a contactless payment method according to another embodiment of the present invention;
FIG. 7 is a flowchart of an application identifier obtaining method according to an embodiment of the present invention;
FIG. 8 is a flowchart of another application identifier obtaining method according to an embodiment of the present invention;
FIG. 9 is a schematic structural diagram of a contactless payment apparatus according to an embodiment of the present invention;
FIG. 10 is a schematic structural diagram of another contactless payment apparatus according to an embodiment of the present invention;
FIG. 11 is a schematic structural diagram of a first obtaining unit according to an embodiment of the present invention;
FIG. 12 is a schematic structural diagram of another first obtaining unit according to an embodiment of the present invention;
FIG. 13 is a schematic structural diagram of still another first obtaining unit according to an embodiment of the present invention;
FIG. 14 is a schematic structural diagram of still another contactless payment apparatus according to an embodiment of the present invention;
FIG. 15 is a schematic structural diagram of a contactless payment apparatus according to another embodiment of the present invention;
FIG. 16 is a schematic structural diagram of a sending unit according to an embodiment of the present invention;
FIG. 17 is a schematic structural diagram of another sending unit according to an embodiment of the present invention;
FIG. 18 is a schematic structural diagram of still another sending unit according to an embodiment of the present invention;
FIG. 19 is a schematic structural diagram of another contactless payment apparatus according to another embodiment of the present invention;
FIG. 20 is a schematic structural diagram of a second obtaining unit according to an embodiment of the present invention;
FIG. 21 is a schematic structural diagram of another second obtaining unit according to an embodiment of the present invention;
FIG. 22 is a schematic structural diagram of a payment terminal according to an embodiment of the present invention; and
FIG. 23 is a schematic structural diagram of a collection terminal according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

The embodiments of the present invention provide a system for applying a contactless payment method. The system for applying the contactless payment method may include a payment terminal and a collection terminal. The payment terminal may be a mobile intelligent terminal on which a contactless payment application is installed. For example, the payment terminal may be a mobile intelligent terminal such as a mobile phone, a tablet computer, or a smart watch. The collection terminal may be a terminal that can implement a fund transfer. Exemplarily, the collection terminal may be a contactless POS machine or a server associated with a contactless POS machine. Multiple contactless payment applications are installed on the payment terminal, and different contactless payment applications may simulate different bank cards. The collection terminal can implement an automatic fund transfer. When a payment terminal on which a contactless payment application is installed approaches a collection terminal, the payment terminal can complete a corresponding payment action with the collection terminal.

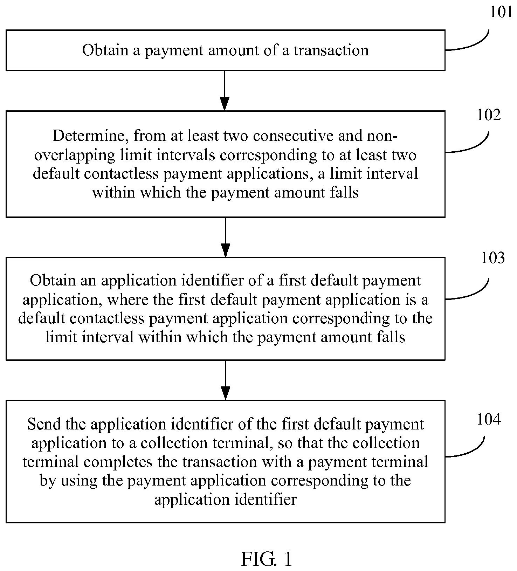

As shown in FIG. 1, an embodiment of the present invention provides a contactless payment method, applied to a payment terminal. The payment terminal may be a mobile intelligent terminal such as a mobile phone, a tablet computer, or a smart watch. There are at least two default contactless payment applications on the payment terminal. The at least two default contactless payment applications are preselected from multiple contactless payment applications on the payment terminal, and are generally selected by a user. Each default contactless payment application is corresponding to one limit interval. Limit intervals corresponding to the at least two default contactless payment applications are consecutive and non-overlapping. The contactless payment method may include the following steps:
Step 101: Obtain a payment amount of a transaction.
Step 102: Determine, from the at least two consecutive and non-overlapping limit intervals corresponding to the at least two default contactless payment applications, a limit interval within which the payment amount falls.
Step 103: Obtain an application identifier of a first default payment application, where the first default payment application is a default contactless payment application corresponding to the limit interval within which the payment amount falls.
Step 104: Send the application identifier of the first default payment application to a collection terminal, so that the collection terminal completes the transaction with the payment terminal by using the payment application corresponding to the application identifier.

The consecutive and non-overlapping intervals mean that no same limit value exists in two limit intervals corresponding to two contactless payment applications, the two limit intervals corresponding to the two contactless payment applications can be sequentially arranged in an ascending order or a descending order of limit intervals, and adjacent limit intervals of two contactless payment applications have a common boundary value.

In conclusion, in the contactless payment method provided in this embodiment of the present invention, there are at least two default contactless payment applications in a payment terminal, each default contactless payment application is corresponding to one limit interval, and a limit interval within which a payment amount falls and a default contactless payment application corresponding to the limit interval are selected according to the payment amount of a transaction, so that a corresponding payment action is performed. A contactless application of a corresponding limit interval can be selected according to a transaction amount, and a user does not need to reset a default contactless payment application, thereby simplifying a payment process and improving payment efficiency.

Optionally, the at least two default contactless payment applications are sequentially arranged in a payable-limit-based order or a priority-based order. A payable limit refers to an account limit of a bank card corresponding to a default contactless payment application, an upper limit of an electronic cash balance (for example, an electronic cash card), an upper limit of a bank account balance (for example, a credit card), or a single transaction limit. The priority is preset in the terminal, or is specified by a user (for example, according to an order for selecting a default contactless payment application by the user, or by using another specifying method), or is determined according to a type of a default contactless payment application (such as an electronic cash card or a credit card), or is determined according to a system policy.

Correspondingly, before step 101, the contactless payment method may further include:
selecting, from the contactless payment applications on the payment terminal, at least two contactless payment applications as the at least two default contactless payment applications; obtaining at least one demarcation limit value; and obtaining, according to the at least one demarcation limit value and an arrangement order of the at least two default contactless payment applications, the limit intervals corresponding to the at least two default contactless payment applications, where the limit intervals corresponding to the at least two default contactless payment applications are consecutive and non-overlapping. The consecutive and non-overlapping intervals mean that no same limit value exists in the limit intervals corresponding to the at least two contactless payment applications, and adjacent limit intervals of two contactless payment applications have a common boundary value. For example, RMB (0, 100] and RMB (100, 200] are adjacent and non-overlapping limit intervals. Optionally, when a transaction amount falls within a limit interval, a default contactless payment application corresponding to the limit interval is preferentially used during a transaction.

The obtaining at least one demarcation limit value may include: obtaining at least one preset demarcation limit value as the at least one demarcation limit value; or receiving, as the at least one demarcation limit value, at least one demarcation limit value that is set by a user; or obtaining an actual payable limit of at least one default contactless payment application of the at least two default contactless payment applications as the at least one demarcation limit value.

Specifically, step 101 may include: receiving, by using a next generation of system environment (The next generation of system environment, NGSE for short) message, the payment amount sent by the collection terminal; or receiving, by using a Near Field Communication (Near Field Communication, NFC for short) message, the payment amount sent by the collection terminal.

Optionally, the payment terminal may obtain the payment amount of the transaction by using a membership card application. The membership card application is an application that is in the payment terminal and that stores membership card information of a user, and may simulate a membership card. The membership card application may obtain, by using a wireless communications technology such as Wireless Fidelity (Wireless-Fidelity, Wi-Fi for short), a cellular network, or NFC communication, some information such as a transaction amount related to a membership card, and may perform a related action such as bonus point accumulation and/or an amount discount.

Exemplarily, there is a first membership card application on the payment terminal, and step 101 may include: sending the first membership card information to the collection terminal, so that the collection terminal sends the payment amount to the first membership card application according to the first membership card information; and obtaining the payment amount from the first membership card application. Optionally, the collection terminal may query a preset relationship between a membership card application and membership card information according to the first membership card information, to obtain the first membership card application corresponding to the first membership card information, for example, an address of the first membership card application (which is generally an address of the payment terminal on which the membership card application is located), an account of the membership card application, or the like may be obtained; and send the payment amount to the first membership card application.

Optionally, there may be two default contactless payment applications on the payment terminal, each default contactless payment application is corresponding to one limit interval, two limit intervals corresponding to the two default contactless payment applications are consecutive and non-overlapping, the two limit intervals corresponding to the two default contactless payment applications are obtained by means of dividing by using a first demarcation limit value, and there is a second membership card application on the payment terminal. Step 101 may include: sending second membership card information and the first demarcation limit value to the collection terminal, so that the collection terminal accumulates bill amounts of the user according to the second membership card information, and when an accumulated amount is greater than the first demarcation limit value, collection terminal sends the accumulated amount to the second membership card application by using the accumulated amount as the payment amount; and obtaining the payment amount from the second membership card application. Optionally, when the accumulated amount is greater than the first demarcation limit value, the collection terminal may query a preset relationship between a membership card application and membership card information, to obtain the second membership card application corresponding to the second membership card information; and send the accumulated amount to the second membership card application by using the accumulated amount as the payment amount.

Further, before step 104, the contactless payment method may further include: configuring application identifiers of the at least two default contactless payment applications to be in a proximity payment system environment PPSE; or configuring the application identifier of the first default payment application to be in a PPSE.

In conclusion, in the contactless payment method provided in this embodiment of the present invention, there are at least two default contactless payment applications in a payment terminal, each default contactless payment application is corresponding to one limit interval, and a limit interval within which a payment amount falls and a default contactless payment application corresponding to the limit interval are selected according to the payment amount of a transaction, so that a corresponding payment action is performed. A contactless application of a corresponding limit interval can be selected according to a transaction amount, and a user does not need to reset a default contactless payment application, thereby simplifying a payment process and improving payment efficiency.

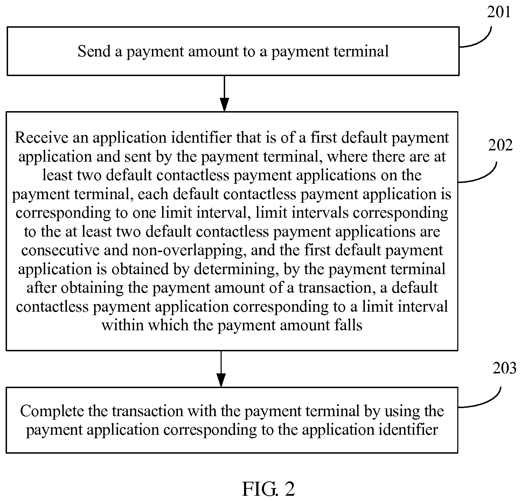

As shown in FIG. 2, an embodiment of the present invention provides another contactless payment method, applied to a collection terminal. The collection terminal may be a contactless POS machine or a server associated with a contactless POS machine. The contactless payment method may include the following steps:
Step 201: Send a payment amount to a payment terminal.
Step 202: Receive an application identifier that is of a first default payment application and sent by the payment terminal, where there are at least two default contactless payment applications on the payment terminal, each default contactless payment application is corresponding to one limit interval, limit intervals corresponding to the at least two default contactless payment applications are consecutive and non-overlapping, and the first default payment application is obtained by determining, by the payment terminal after obtaining the payment amount of a transaction, a default contactless payment application corresponding to a limit interval within which the payment amount falls.
Step 203: Complete the transaction with the payment terminal by using the payment application corresponding to the application identifier.

In conclusion, in the contactless payment method provided in this embodiment of the present invention, there are at least two default contactless payment applications in a payment terminal, each default contactless payment application is corresponding to one limit interval, and a limit interval within which a payment amount falls and a default contactless payment application corresponding to the limit interval are selected according to the payment amount of a transaction, so that a corresponding payment action is performed. A contactless application of a corresponding limit interval can be selected according to a transaction amount, and a user does not need to reset a default contactless payment application, thereby simplifying a payment process and improving payment efficiency.

Specifically, the sending a payment amount to a payment terminal may include: sending the payment amount to the payment terminal by using a next generation system environment NGSE message; or sending the payment amount to the payment terminal by using a Near Field Communication NFC message.

Exemplarily, there is a first membership card application on the payment terminal, and the sending a payment amount to a payment terminal may include: receiving first membership card information sent by the payment terminal; querying a preset relationship between a membership card application and membership card information according to the first membership card information, to obtain the first membership card application corresponding to the first membership card information, for example, an address of the first membership card application (which is generally an address of the payment terminal on which the membership card application is located), an account of the membership card application, or the like may be obtained; and sending the payment amount to the first membership card application on the payment terminal, so that the payment terminal obtains the payment amount from the first membership card application.

Optionally, there may be two default contactless payment applications on the payment terminal, each default contactless payment application is corresponding to one limit interval, two limit intervals corresponding to the two default contactless payment applications are consecutive and non-overlapping, the two limit intervals corresponding to the two default contactless payment applications are obtained by means of dividing by using a first demarcation limit value, and there is a second membership card application on the payment terminal. The sending a payment amount to a payment terminal may include: receiving second membership card information and the first demarcation limit value that are sent by the payment terminal; querying a preset relationship between a membership card application and membership card information when an accumulated amount is greater than the first demarcation limit value, to obtain the second membership card application corresponding to the second membership card information; and sending the accumulated amount to the second membership card application on the payment terminal by using the accumulated amount as the payment amount, so that the payment terminal obtains the payment amount from the second membership card application.

In conclusion, in the contactless payment method provided in this embodiment of the present invention, there are at least two default contactless payment applications in a payment terminal, each default contactless payment application is corresponding to one limit interval, and a limit interval within which a payment amount falls and a default contactless payment application corresponding to the limit interval are selected according to the payment amount of a transaction, so that a corresponding payment action is performed. A contactless application of a corresponding limit interval can be selected according to a transaction amount, and a user does not need to reset a default contactless payment application, thereby simplifying a payment process and improving payment efficiency.

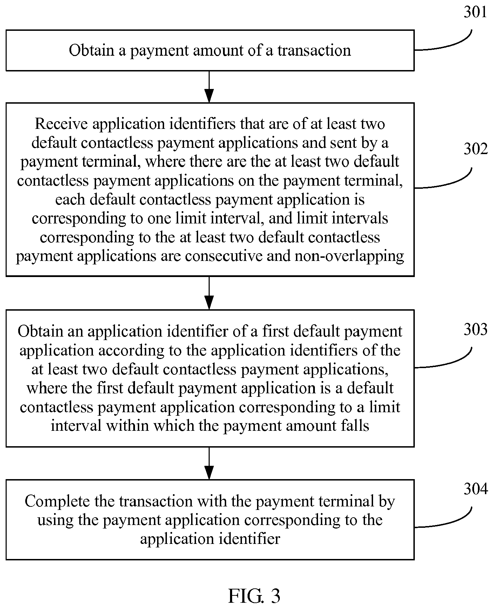

As shown in FIG. 3, an embodiment of the present invention provides still another contactless payment method, applied to a collection terminal. The collection terminal may be a contactless POS machine or a server associated with a contactless POS machine. The contactless payment method may include the following steps:
Step 301: Obtain a payment amount of a transaction.
Step 302: Receive application identifiers that are of at least two default contactless payment applications and sent by a payment terminal, where there are the at least two default contactless payment applications on the payment terminal, each default contactless payment application is corresponding to one limit interval, and limit intervals corresponding to the at least two default contactless payment applications are consecutive and non-overlapping.
Step 303: Obtain an application identifier of a first default payment application according to the application identifiers of the at least two default contactless payment applications, where the first default payment application is a default contactless payment application corresponding to a limit interval within which the payment amount falls.
Step 304: Complete the transaction with the payment terminal by using the payment application corresponding to the application identifier.

In conclusion, in the contactless payment method provided in this embodiment of the present invention, there are at least two default contactless payment applications in a payment terminal, each default contactless payment application is corresponding to one limit interval, and a limit interval within which a payment amount of a transaction falls and a default contactless payment application corresponding to the limit interval are selected according to the payment amount of the transaction, so that a corresponding payment action is performed. A contactless application of a corresponding limit interval can be selected according to a transaction amount, and a user does not need to reset a default contactless payment application, thereby simplifying a payment process and improving payment efficiency.

Further, step 303 may include:
obtaining the limit intervals corresponding to the at least two default contactless payment applications; and using, as the application identifier of the first default payment application according to a preset correspondence between an application identifier of a contactless payment application and a limit interval, an application identifier of the default contactless payment application corresponding to the limit interval within which the payment amount falls.

Exemplarily, step 303 may include:
determining, according to the application identifiers of the at least two default contactless payment applications, bank card types corresponding to the at least two default contactless payment applications; determining, according to a preset correspondence between a bank card type and a limit interval, a bank card type corresponding to the limit interval within which the payment amount falls; and using an application identifier corresponding to the determined bank card type as the application identifier of the first default payment application according to the determined bank card type.

In conclusion, in the contactless payment method provided in this embodiment of the present invention, a payment terminal sends, to a collection terminal, at least two default contactless payment applications and limit intervals corresponding to the default contactless payment applications, and the collection terminal selects, according to a payment amount of a transaction, a limit interval within which the payment amount falls and a default contactless payment application corresponding to the limit interval, so that a corresponding payment action is performed. A contactless application of a corresponding limit interval can be selected according to a transaction amount, and a user does not need to reset a default contactless payment application, thereby simplifying a payment process and improving payment efficiency.

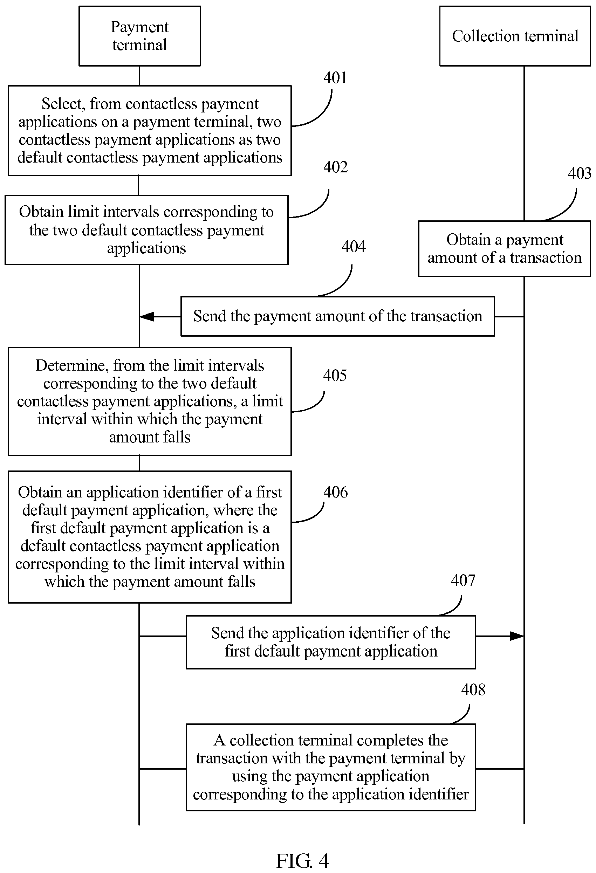

In an embodiment of the present invention, for example, a payment terminal selects two default contactless payment applications. Specifically, as shown in FIG. 4, this embodiment of the present invention provides yet another contactless payment method. The contactless payment method may include the following steps.
Step 401: The payment terminal selects, from contactless payment applications on the payment terminal, two contactless payment applications as two default contactless payment applications.

Specifically, there may be at least two contactless payment applications on the payment terminal, and each contactless payment application is corresponding to a payable limit. The payable limit may be an upper limit of a payable amount of a bank card corresponding to the contactless payment application. It is assumed that there are four contactless payment applications on the payment terminal, which are respectively a contactless payment application A, a contactless payment application B, a contactless payment application C, and a contactless payment application D. A payable limit of the contactless payment application A may be RMB 1000, a payable limit of the contactless payment application B may be RMB 2000, a payable limit of the contactless payment application C is RMB 3000, and a payable limit of the contactless payment application D may be RMB 4000. The payment terminal may prompt a user to select, from the at least two contactless payment applications according to the payable limits, two contactless payment applications as the two default contactless payment applications on the payment terminal. Optionally, the at least two default contactless payment applications may be sequentially arranged in a payable-limit-based order or a priority-based order.

For example, when the user selects, from the contactless payment application A, the contactless payment application B, the contactless payment application C, and the contactless payment application D, the contactless payment application A and the contactless payment application B as the two default contactless payment applications. Exemplarily, the contactless payment application A is a contactless payment application of a credit card of Bank of China, and the contactless payment application B is a contactless payment application of a credit card of China Construction Bank. The payable limit of the contactless payment application B is higher than the payable limit of the contactless payment application A. As shown in Table 1, the two default contactless payment applications are sequentially arranged in a descending order of payable limits or priorities. Alternatively, as shown in Table 2, the two default contactless payment applications are sequentially arranged in an ascending order of payable limits or priorities.

**Table 1**

| |
|---|
| Contactless payment application B |
| Contactless payment application A |

**Table 2**

| |
|---|
| Contactless payment application A |
| Contactless payment application B |

Step 402: The payment terminal obtains two limit intervals corresponding to the two default contactless payment applications.

Multiple methods may be used by the payment terminal to obtain the two limit intervals corresponding to the two default contactless payment applications. Exemplarily, the following two methods may be included:

According to one aspect, the payment terminal may obtain the limit intervals corresponding to the two default contactless payment applications from preset limit intervals.

Specifically, each contactless payment application of the contactless payment applications on the payment terminal is corresponding to one preset limit interval, and therefore, each obtained default contactless payment application is corresponding to one preset limit interval; in this case, the payment terminal may directly determine the two limit intervals corresponding to the two default contactless payment applications from these preset limit intervals. For example, if a preset limit interval of a contactless payment application of a credit card of Bank of China is RMB (0, 1000], and a preset limit interval of a contactless payment application of a credit card of China Construction Bank is RMB (1500, 5000], the preset limit interval of the contactless payment application of the credit card of Bank of China and the preset limit interval of the contactless payment application of the credit card of China Construction Bank are directly obtained.

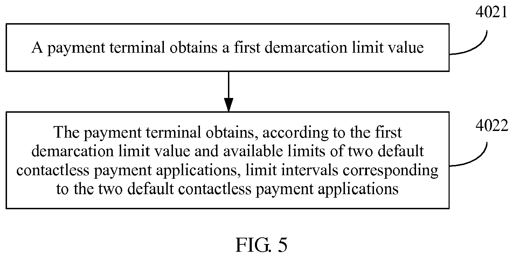

According to another aspect, the payment terminal obtains, by means of dividing according to a first demarcation limit value, the two limit intervals corresponding to the two default contactless payment applications. As shown in FIG. 5, the method may specifically include the following steps.

Step 4021: The payment terminal obtains the first demarcation limit value.

It is assumed that a user selects a contactless payment application A and a contactless payment application B as the two default contactless payment applications. A payable limit of the contactless payment application A is RMB 1000, and a payable limit of the contactless payment application B is RMB 2000.

According to a first aspect, when a demarcation limit value is preset in the payment terminal, the payment terminal may obtain the preset demarcation limit value as the first demarcation limit value. For example, when the preset demarcation limit value in the payment terminal is RMB 900, the payment terminal may obtain the preset demarcation limit value RMB 900 as the first demarcation limit value.

According to a second aspect, the user may set the first demarcation limit value in the mobile terminal. Exemplarily, the demarcation limit value may be any payable amount of a contactless payment application with a lower payable limit in the two default contactless payment applications. Optionally, when the payment terminal selects n default contactless payment applications, the payment terminal needs to obtain n-1 demarcation limit values. Exemplarily, a user may set a first demarcation limit value of a contactless payment application A and a contactless payment application B to RMB 800 in the mobile terminal. A payable limit RMB 1000 of the contactless payment application A is less than a payable limit RMB 2000 of the contactless payment application B, and the first demarcation limit value RMB 800 needs to be less than or equal to the payable limit RMB 1000 of the contactless payment application A.

According to a third aspect, the payment terminal may obtain an actual payable limit of at least one default contactless payment application of the two contactless payment applications as the first demarcation limit value. Specifically, the actual payable limit may be an actual amount deposited in a bank card.

Optionally, for default contactless payment applications corresponding to different bank cards, the payment terminal obtains actual payable limits of the default contactless payment applications by using different methods. Exemplarily, if there are default contactless payment applications corresponding to multiple bank cards in the payment terminal, the payment terminal may store actual payable limits of default contactless payment applications corresponding to one part of bank cards (such as an electronic cash card), the payment terminal may quickly obtain, from locally stored information, the actual payable limits of the default contactless payment applications corresponding to the part of bank cards. Because the payment terminal does not store actual payable limits of default contactless payment applications corresponding to the other part of bank cards (such as a credit card), and the actual payable limits corresponding to the default contactless payment applications are generally stored in a corresponding server, the default contactless payment applications corresponding to the other part of bank cards need to be obtained from the corresponding server, and the payment terminal obtains the actual payable limits of the default contactless payment applications corresponding to the part of bank cards at a relatively slow speed.

Exemplarily, it is assumed that there are two default contactless payment applications on the payment terminal. When storing an actual payable limit of one default contactless payment application, the payment terminal may obtain the actual payable limit of the default contactless payment application as the first demarcation limit value. When storing both actual payable limits of the two default contactless payment applications, or storing neither of actual payable limits of the two default contactless payment applications, the payment terminal may obtain an actual payable limit of a contactless payment application with a lower payable limit in the two default contactless payment applications as the first demarcation limit value. It is assumed that the two default contactless payment applications are respectively a contactless payment application A and a contactless payment application B, the contactless payment application A is an electronic cash card, the contactless payment application B is a credit card, and a payable limit of the contactless payment application A is less than that of the contactless payment application B. If the payment terminal stores an actual payable limit of the contactless payment application A, the payment terminal obtains the actual payable limit of the contactless payment application A as the first demarcation limit value. If the payment terminal stores both actual payable limits of the contactless payment applications A and B, or stores neither of actual payable limits of the contactless payment applications A and B, the payment terminal may obtain an actual payable limit of the contactless payment application A as the first demarcation limit value.

Further, it is assumed that there are four default contactless payment applications on the payment terminal, which are respectively a contactless payment application C, a contactless payment application D, a contactless payment application E, and a contactless payment application F. In this case, three demarcation limit values need to be obtained: a first demarcation limit value, a second demarcation limit value, and a third demarcation limit value. It is assumed that the payment terminal stores an actual payable limit of the default contactless payment application C, the payment terminal does not store actual payable limits of the contactless payment applications D, E, and F, and a payable limit of the contactless payment application F is the largest among payable limits of the contactless payment applications D, E, and F. The payment terminal may obtain the actual payable limit of the contactless payment application C, and detect the payable limits of the contactless payment applications D, E, and F, to obtain actual payable limits of two contactless payment applications with lower payable limits, that is, to obtain actual payable limits of contactless payment applications D and E. Then, the payment terminal may sort obtained actual payable limits of the contactless payment applications C, D, and E in an ascending order, and respectively use the sorted actual payable limits of the contactless payment applications C, D, and E as the first demarcation limit value, the second demarcation limit value, and the third demarcation limit value. Optionally, if the payment terminal stores preset demarcation limit values corresponding to the contactless payment applications D and E, the payment terminal may obtain the preset demarcation limit values corresponding to the contactless payment applications D and E as the second demarcation limit value and the third demarcation limit value.

It is assumed that the payment terminal stores all actual payable limits of the contactless payment application C, the contactless payment application D, the contactless payment application E, and the contactless payment application F, or stores none of actual payable limits of the contactless payment application C, the contactless payment application D, the contactless payment application E, and the contactless payment application F, and a payable limit of the contactless payment application F is the largest among payable limits of contactless payment applications C, D, E, and F. The payment terminal may detect the payable limits of the contactless payment applications C, D, E, and F, to obtain actual payable limits of contactless payment applications C, D, and E with lower payable limits, may sort the obtained actual payable limits of the contactless payment applications C, D, and E in an ascending order, and respectively use the sorted actual payable limits of the contactless payment applications C, D, and E as the first demarcation limit value, the second demarcation limit value, and the third demarcation limit value.

Step 4022: The payment terminal obtains, according to the first demarcation limit value and an arrangement order of the at least two default contactless payment applications, the two limit intervals corresponding to the two default contactless payment applications.

Exemplarily, the two limit intervals corresponding to the two default contactless payment applications may be set according to the first demarcation limit value obtained in step 4021 and the payable limits of the two contactless payment applications obtained in step 401. Specifically, each default contactless payment application of the two default contactless payment applications is corresponding to one limit interval, and the two limit intervals corresponding to the two default contactless payment applications are consecutive and non-overlapping. Assuming that the first demarcation limit value obtained in step 4021 is RMB 900, a limit interval corresponding to a contactless payment application A is set to RMB (0, 900], and a limit interval corresponding to a contactless payment application B is set to RMB (900, +∞]. The RMB (0, 900] and the RMB (900, +∞] are adjacent and non-overlapping limit intervals.

Step 403: A collection terminal obtains a payment amount of a transaction.

Exemplarily, the collection terminal may be a contactless POS machine or a server associated with a contactless POS machine.

Step 404: The collection terminal sends the payment amount of the transaction to the payment terminal.

According to a first aspect, after the collection terminal collects the payment amount of the transaction, the collection terminal may send the payment amount of the transaction to the payment terminal. The collection terminal may send the payment amount to the payment terminal by using an NGSE message or by using an NFC message. Optionally, NGSE is put forward by Claire Venot (Claire Venot) of the Multi-Card Emulation Environment Working Group (Multi-Card Emulation Environment Working Group) in a file entitled "Mobile Payment Application Selection (Mobile Payment Application Selection)" during a conference call (Conference Call) on a Global Platform (Global Platform) on September 22, 2014. NFC is a proximity communications technology, and the NGSE message may also be transmitted by using an NFC message.

According to a second aspect, the payment terminal may obtain the payment amount by using a membership card application.

When paying for a consumption amount, a user generally uses a membership card, and swipes the membership card to accumulate specific bonus point. In actual application, a membership card application may simulate a membership card, and when a payment terminal on which a membership card application is installed approaches a collection terminal, the payment terminal can complete a corresponding action such as membership card bonus point accumulation and/or an amount discount with the collection terminal. A correspondence between membership card information and a membership card application has been recorded in the collection terminal or a corresponding server when a user registers a membership card by using the payment terminal, and the collection terminal can obtain the correspondence between the membership card information and the membership card application. Therefore, the collection terminal may query, according to the membership card information, the membership card application corresponding to the membership card information, and determine an address of the membership card application (which is generally an address of the payment terminal on which the membership card application is located) or an account of the membership card application. Exemplarily, the membership card information may include information such as a membership card number and a mobile number.

Specifically, at least two methods are used by the payment terminal to obtain the payment amount by using the membership card application:
First, when there is a first membership card application on the payment terminal, the payment terminal may send first membership card information to the collection terminal. The collection terminal queries a preset relationship between a membership card application and membership card information according to the first membership card information, to obtain the first membership card application corresponding to the first membership card information, and sends the payment amount to the first membership card application according to an address of the first membership card application. Because both the first membership card application and the default contactless payment applications are located in the payment terminal, the payment terminal may obtain the payment amount from the first membership card application.

Second, when there is a second membership card application on the payment terminal, the payment terminal may send second membership card information and the first demarcation limit value to the collection terminal. The collection terminal accumulates bill amounts of the user according to the second membership card information, queries a preset relationship between a membership card application and membership card information when an accumulated amount is greater than the first demarcation limit value, to obtain the second membership card application corresponding to the second membership card information, and sends the accumulated amount to the second membership card application according to an address of the second membership card application by using the accumulated amount as the payment amount. Because both the second membership card application and the default contactless payment applications are located in the payment terminal, the payment terminal may obtain the payment amount from the second membership card application. Optionally, because bill amounts of the user may be further accumulated, the payment amount may be different from an actual payment amount.

For example, when a user selects three commodities, a price of a first commodity is RMB 500, a price of a second commodity is RMB 600, and a price of a third commodity is RMB 650. In this case, it is assumed that the first demarcation limit value is RMB 1000. The collection terminal adds bill amounts of the user to a user account according to membership card information, and accumulates the bill amounts of the user. When accumulating an amount of the first commodity, the collection terminal adds the price RMB 500 of the first commodity to the user account, and when accumulating an amount of the second commodity, the collection terminal adds the price RMB 600 of the second commodity to the user account. In this case, because an amount accumulated in the user account is RMB 1100 and is greater than the first demarcation limit value RMB 1000, the collection terminal sends the accumulated amount RMB 1100 to a membership card application on the payment terminal by using the accumulated amount RMB 1100 as a payment amount, and the payment terminal may obtain the payment amount from the membership card application. In addition, the collection terminal needs to accumulate an amount of the third commodity, that is, the price RMB 650 of the third commodity is added to the user account, to obtain the actual payment amount RMB 1750.

In the prior art, when a user makes consumption payment, if the user purchases multiple commodities, after accumulation of amounts of all commodities, and a payment terminal is generally notified of a total accumulated amount by using the total accumulated amount as a payment amount. However, in this embodiment of the present invention, both first membership card information and a first demarcation limit value are sent to a collection terminal, and the collection terminal immediately sends a payment limit to a payment terminal when an accumulated amount is greater than the first demarcation limit value. In this way, the payment terminal may quickly determine a first default payment application according to the payment limit, and does not need to select a default payment application after a total accumulated amount is calculated, which reduces a total delay of a contactless payment process and improves user experience.

Optionally, an action of sending membership card information to the collection terminal by the payment terminal may be an action automatically performed between the payment terminal and the collection terminal, or may be an action performed by the payment terminal or the collection terminal under command of a user of the payment terminal or a user of the collection terminal. After the collection terminal receives the membership card information, the collection terminal may actively send the payment amount to the payment terminal, or the payment terminal actively sends query information of the payment amount to the collection terminal, so that the collection terminal sends the payment amount to the payment terminal.

In addition, when the payment terminal obtains the payment amount by using the membership card application, the collection terminal may establish, by using Wi-Fi or a cellular network, a network connection to the membership card application on the payment terminal, and send the payment amount to the membership card application on the payment terminal by means of the network connection. Alternatively, the collection terminal establishes an NFC connection to the payment terminal, and sends the payment amount to the membership card application on the payment terminal by using NFC information.

Step 405: The payment terminal determines, from the two limit intervals corresponding to the two default contactless payment applications, a limit interval within which the payment amount falls.

After receiving the payment amount, the payment terminal selects, from the two limit intervals corresponding to the two default contactless payment applications, the limit interval within which the payment amount falls, so as to determine the limit interval within which the payment amount falls and a default contactless payment application corresponding to the limit interval within which the payment amount falls.

Exemplarily, priorities of the two default contactless payment applications may be preset, when the limit interval within which the payment amount falls is searched for in the two limit intervals, a limit interval corresponding to a default contactless payment application with a higher priority may be preferentially searched. If the payment amount falls within the limit interval, searching is stopped, and it is determined that the payment amount falls within the limit interval. If the payment amount falls beyond the limit interval, a limit interval corresponding to a default contactless payment application with a lower priority is searched until the limit interval within which the payment amount falls is determined.

For example, two default contactless payment applications are a contactless payment application A and a contactless payment application B. A priority of the contactless payment application A is higher, and a priority of the contactless payment application B is lower. A limit interval corresponding to the contactless payment application A is RMB (0, 900], and a limit interval corresponding to the contactless payment application B is RMB (900, 2000]. Assuming that the payment amount is RMB 500, the contactless application A with a higher priority may be first searched, and when the payment amount RMB 500 is found to fall within the limit interval RMB (0, 900], searching is stopped, and a limit interval within which the payment amount RMB 500 falls is determined as RMB (0, 900]. Assuming that the payment amount is RMB 1000, the contactless application A with a higher priority may be first searched, when the payment amount RMB 500 is found to fall beyond the limit interval RMB (0, 900], searching continues to be performed in the limit interval corresponding to the default contactless payment application B with a lower priority, and when the payment amount RMB 1000 is found to fall within the limit interval RMB (900, 2000], a limit interval within which the payment amount RMB 1000 falls is determined as RMB (900, 2000].

Step 406: The payment terminal obtains an application identifier of a first default payment application, where the first default payment application is a default contactless payment application corresponding to the limit interval within which the payment amount falls.

Because the limit interval within which the payment amount falls and the default contactless payment application, that is, the first default payment application, corresponding to the limit interval within which the payment amount falls are determined in step 405, and each contactless payment application carries an application identifier of the contactless payment application, the payment terminal may obtain the application identifier of the first default payment application.

Optionally, in actual application, in step 402, the two limit intervals that are corresponding to the two default contactless payment applications and that are obtained by the payment terminal may be overlapped, or the two limit intervals corresponding to the two default contactless payment applications may be inconsecutive. In step 406, if the payment amount falls within an overlapping area or an inconsecutive area, priorities of the two default contactless payment applications may be set, and a default contactless payment application with a higher priority is obtained as the first default payment application. Generally, a contactless payment application with a high payable limit has a higher priority.

Step 407: The payment terminal sends the application identifier of the first default payment application to the collection terminal.

Step 408: The collection terminal completes the transaction with the payment terminal by using the payment application corresponding to the application identifier.

Exemplarily, for a specific method used by the collection terminal to complete the transaction with the payment terminal by using the payment application corresponding to the application identifier, reference may be made to the method for completing payment by using a contactless payment application in the prior art.

Optionally, after step 406, that is, after the payment terminal obtains the application identifier of the first default payment application, the payment terminal may further configure application identifiers of the two default contactless payment applications to be in a proximity payment system environment (Proximity Payment Systems Environment, PPSE for short), or configure the application identifier of the first default payment application to be in a PPSE, so that the collection terminal performs a subsequent transaction. In addition, when the payment terminal selects another quantity of default contactless payment applications, reference may be made to the processing method of the two default contactless payment applications in this embodiment of the present invention, and details are not described in this embodiment of the present invention again.

It should be noted that only an example in which there are two default contactless payment applications on the payment terminal is used for exemplary description in this embodiment of the present invention. In actual application, there may be multiple default contactless payment applications on the payment terminal. For a contactless payment method of any two contactless payment applications with adjacent limit intervals in the multiple default contactless payment applications, reference may be made to the contactless payment method of the two default contactless payment applications in the foregoing embodiment, and details are not described in this embodiment of the present invention again.

In conclusion, in the contactless payment method provided in this embodiment of the present invention, there are at least two default contactless payment applications in a payment terminal, each default contactless payment application is corresponding to one limit interval, and a limit interval within which a payment amount falls and a default contactless payment application corresponding to the limit interval are selected according to the payment amount of a transaction, so that a corresponding payment action is performed. A contactless application of a corresponding limit interval can be selected according to a transaction amount, and a user does not need to reset a default contactless payment application, thereby simplifying a payment process and improving payment efficiency.

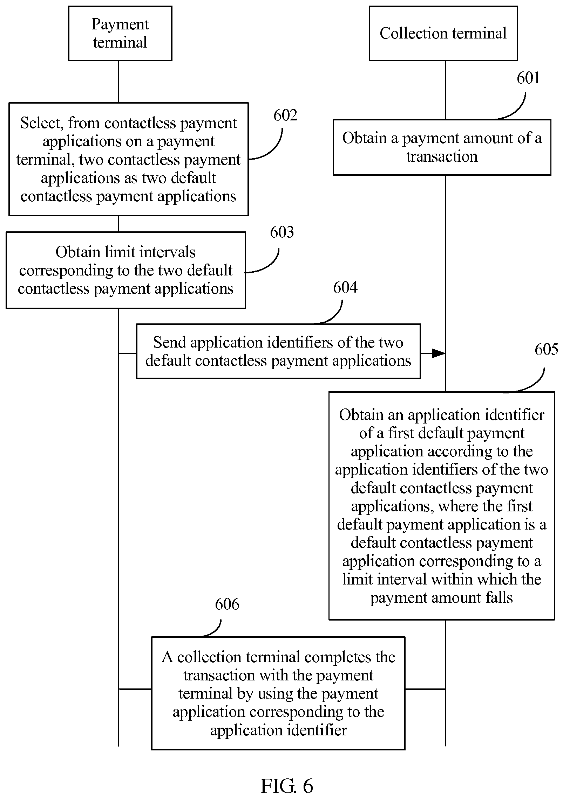

In an embodiment of the present invention, it is assumed that the payment terminal selects two default contactless payment applications. When there are the two default contactless payment applications on the payment terminal, specifically, as shown in FIG. 6, another embodiment of the present invention provides a contactless payment method. The contactless payment method may include the following steps.

Step 601: A collection terminal obtains a payment amount of a transaction.

Exemplarily, the collection terminal may be a contactless POS machine or a server associated with a contactless POS machine.

Step 602: The payment terminal selects, from contactless payment applications on the payment terminal, two contactless payment applications as two default contactless payment applications.

Optionally, for a detailed description of step 602 in this embodiment of the present invention, reference may be made to the detailed description of step 401 in the foregoing embodiment.

Step 603: The payment terminal obtains two limit intervals corresponding to the two default contactless payment applications.

Optionally, for a detailed description of step 603 in this embodiment of the present invention, reference may be made to the detailed description of step 402 in the foregoing embodiment.

Step 604: The payment terminal sends application identifiers of the two default contactless payment applications to the collection terminal.

Optionally, the payment terminal may send the application identifiers of the two default contactless payment applications obtained in step 602 to the collection terminal.

Step 605: The collection terminal obtains an application identifier of a first default payment application according to the application identifiers of the two default contactless payment applications, where the first default payment application is a default contactless payment application corresponding to a limit interval within which the payment amount falls.

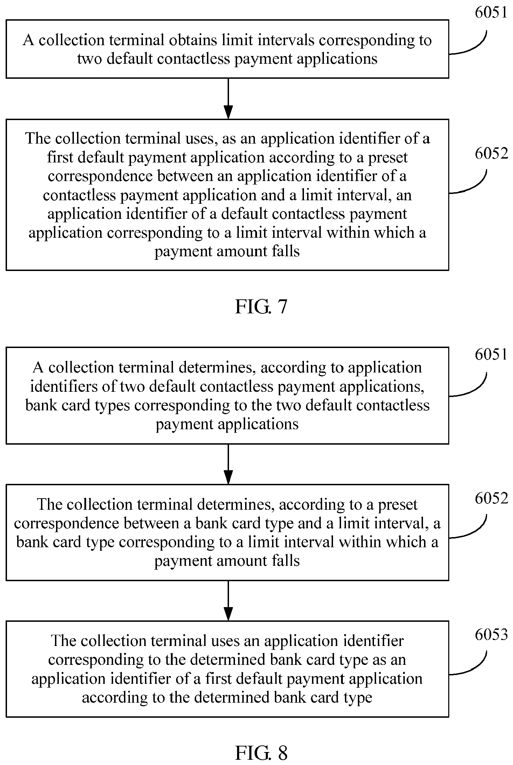

According to one aspect, as shown in FIG. 7, step 605 may include the following steps.

Step 6051: The collection terminal obtains the two limit intervals corresponding to the two default contactless payment applications.

Specifically, the collection terminal may obtain preset two limit intervals corresponding to the two default contactless payment applications. Exemplarily, alternatively, the collection terminal may obtain two limit intervals that are corresponding to the two default contactless payment applications and sent by the payment terminal. For a specific step of obtaining, by the payment terminal, the two limit intervals corresponding to the two default contactless payment applications, reference may be made to the specific steps of step 402 in the foregoing embodiment.

Step 6052: The collection terminal uses, as the application identifier of the first default payment application according to a preset correspondence between an application identifier of a contactless payment application and a limit interval, an application identifier of the default contactless payment application corresponding to the limit interval within which the payment amount falls.

Exemplarily, the collection terminal may determine the limit interval within which the payment amount obtained in step 601 falls, and use, as the application identifier of the first default payment application according to a correspondence between the limit interval and the contactless payment application, the application identifier of the default contactless payment application corresponding to the limit interval within which the payment amount falls. For example, the two default contactless payment applications received by the collection terminal are respectively a contactless payment application A and a contactless payment application B. A limit interval corresponding to the contactless payment application A is RMB (0, 1000], and a limit interval corresponding to the contactless payment application B is RMB (1000, 2000]. When the payment amount obtained by the collection terminal is RMB 500, the collection terminal may determine, as RMB (0, 1000], the limit interval within which the payment amount falls, and use an application identifier of the default contactless payment application A corresponding to the limit interval RMB (0, 1000] as the application identifier of the first default payment application.

According to another aspect, as shown in FIG. 8, step 605 may include the following steps:
Step 6051: The collection terminal determines, according to the application identifiers of the two default contactless payment applications, bank card types corresponding to the two default contactless payment applications.
   Exemplarily, according to the application identifiers of the two default contactless payment applications, the collection terminal may query, in a memory of the collection terminal or on the Internet, the bank card types corresponding to the two default contactless payment applications. Optionally, different bank cards may be corresponding to different limit intervals.
Step 6052: The collection terminal determines, according to a preset correspondence between a bank card type and a limit interval, a bank card type corresponding to the limit interval within which the payment amount falls.
   In this case, the collection terminal has determined the bank card types corresponding to the two default contactless payment applications and limit intervals corresponding to the bank card types. The collection terminal may determine the limit interval within which the payment amount obtained in step 601 falls, so as to obtain the bank card type corresponding to the limit interval. For example, the two default contactless payment applications received by the collection terminal are respectively a contactless payment application A of a credit card of Bank of China and a contactless payment application B of a credit card of China Construction Bank. A limit interval corresponding to the credit card of Bank of China is RMB (0, 1000], and a limit interval corresponding to the credit card of China Construction Bank is RMB (1000, 2000]. When the payment amount obtained by collection terminal is RMB 500, the collection terminal may determine, as RMB (0, 1000], the limit interval within which the payment amount falls, and determine, as a credit card of Bank of China, the bank card type corresponding to the limit interval RMB (0, 1000] within which the payment amount RMB 500 falls.
Step 6053: The collection terminal uses an application identifier corresponding to the determined bank card type as the application identifier of the first default payment application according to the determined bank card type.
   Specifically, because the bank card type corresponding to the limit interval within which the payment amount falls has been determined in step 6053, the application identifier corresponding to the determined bank card type may be used as the application identifier of the first default payment application. Exemplarily, when the bank card type corresponding to the limit interval within which the payment amount falls is determined as a credit card of Bank of China, an application identifier of a contactless payment application of the credit card of Bank of China may be used as the application identifier of the first default payment application.
Step 606: The collection terminal completes the transaction with the payment terminal by using the payment application corresponding to the application identifier.

Exemplarily, for a specific method used by the collection terminal to complete the transaction with the payment terminal by using the payment application corresponding to the application identifier obtained in step 605, reference may be made to the method for completing payment by using a contactless payment application in the prior art.

In addition, when the payment terminal selects another quantity of default contactless payment applications, reference may be made to the processing method of the two default contactless payment applications in this embodiment of the present invention, and details are not described in this embodiment of the present invention again.

In conclusion, in the contactless payment method provided in this embodiment of the present invention, a payment terminal sends, to a collection terminal, at least two default contactless payment applications and limit intervals corresponding to the default contactless payment applications, and the collection terminal selects, according to a payment amount of a transaction, a limit interval within which the payment amount falls and a default contactless payment application corresponding to the limit interval, so that a corresponding payment action is performed. A contactless application of a corresponding limit interval can be selected according to a transaction amount, and a user does not need to reset a default contactless payment application, thereby simplifying a payment process and improving payment efficiency.

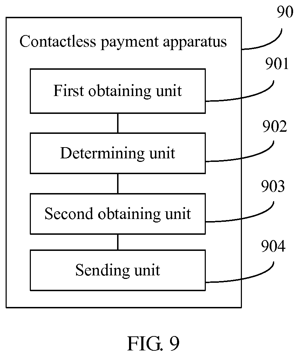

As shown in FIG. 9, an embodiment of the present invention provides a contactless payment apparatus 90, applied to a payment terminal. There are at least two default contactless payment applications on the payment terminal, and each default contactless payment application is corresponding to one limit interval. The contactless payment apparatus 90 may include:
a first obtaining unit 901, configured to obtain a payment amount of a transaction;
a determining unit 902, configured to determine, from limit intervals corresponding to the at least two default contactless payment applications, a limit interval within which the payment amount falls, where the limit intervals corresponding to the at least two default contactless payment applications are consecutive and non-overlapping;
a second obtaining unit 903, configured to obtain an application identifier of a first default payment application, where the first default payment application is a default contactless payment application corresponding to the limit interval within which the payment amount falls; and
a sending unit 904, configured to send the application identifier of the first default payment application to a collection terminal, so that the collection terminal completes the transaction with the payment terminal by using the payment application corresponding to the application identifier.

In conclusion, in the contactless payment apparatus provided in this embodiment of the present invention, a determining unit determines, according to a payment amount of a transaction, a limit interval within which the payment amount falls, a second obtaining unit obtains an application identifier of a first default payment application, and a sending unit sends the application identifier of the first default payment application to a collection terminal, so that the collection terminal completes the transaction with a payment terminal by using the payment application corresponding to the application identifier. A contactless application of a corresponding limit interval can be selected according to a transaction amount, and a user does not need to reset a default contactless payment application, thereby simplifying a payment process and improving payment efficiency.

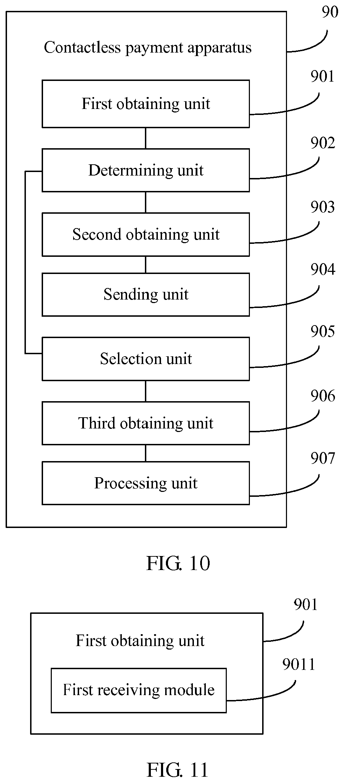

As shown in FIG. 10, an embodiment of the present invention provides another contactless payment apparatus 90, applied to a payment terminal. The contactless payment apparatus 90 may include:
a first obtaining unit 901, configured to obtain a payment amount of a transaction;
a determining unit 902, configured to determine, from limit intervals corresponding to at least two default contactless payment applications, a limit interval within which the payment amount falls;
a second obtaining unit 903, configured to obtain an application identifier of a first default payment application, where the first default payment application is a default contactless payment application corresponding to the limit interval within which the payment amount falls;
a sending unit 904, configured to send the application identifier of the first default payment application to a collection terminal, so that the collection terminal completes the transaction with the payment terminal by using the payment application corresponding to the application identifier;
a selection unit 905, configured to select, from contactless payment applications on the payment terminal, at least two contactless payment applications as the at least two default contactless payment applications;
a third obtaining unit 906, configured to obtain at least one demarcation limit value; and
a processing unit 907, configured to obtain, according to the at least one demarcation limit value and an arrangement order of the at least two default contactless payment applications, the limit intervals corresponding to the at least two default contactless payment applications.

In conclusion, in the contactless payment apparatus provided in this embodiment of the present invention, a determining unit determines, according to a payment amount of a transaction, a limit interval within which the payment amount falls, a second obtaining unit obtains an application identifier of a first default payment application, and a sending unit sends the application identifier of the first default payment application to a collection terminal, so that the collection terminal completes the transaction with a payment terminal by using the payment application corresponding to the application identifier. A contactless application of a corresponding limit interval can be selected according to a transaction amount, and a user does not need to reset a default contactless payment application, thereby simplifying a payment process and improving payment efficiency.

Exemplarily, the third obtaining unit 906 is specifically configured to: obtain at least one preset demarcation limit value as the at least one demarcation limit value; or receive, as the at least one demarcation limit value, at least one demarcation limit value that is set by a user; or obtain an actual payable limit of at least one default contactless payment application of the at least two default contactless payment applications as the at least one demarcation limit value.

As shown in FIG. 11, the first obtaining unit 901 may include:
a first receiving module 9011, configured to: receive, by using a next generation system environment NGSE message, the payment amount sent by the collection terminal; or receive, by using a Near Field Communication NFC message, the payment amount sent by the collection terminal.

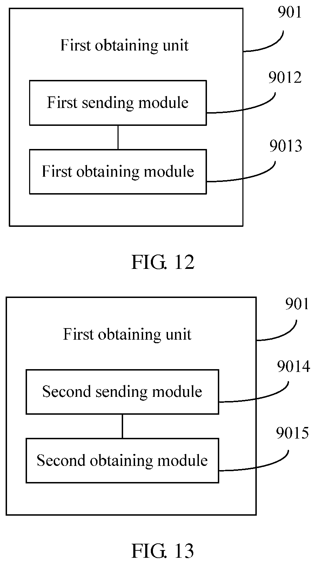

There is a first membership card application on the payment terminal, and as shown in FIG. 12, the first obtaining unit 901 may include:
a first sending module 9012, configured to send first membership card information to the collection terminal, so that the collection terminal queries a preset relationship between a membership card application and membership card information according to the first membership card information, to obtain the first membership card application corresponding to the first membership card information, and sends the payment amount to the first membership card application; and
a first obtaining module 9013, configured to obtain the payment amount from the first membership card application.

Specifically, there are two default contactless payment applications on the payment terminal, each default contactless payment application is corresponding to one limit interval, two limit intervals corresponding to the two default contactless payment applications are consecutive and non-overlapping, the two limit intervals corresponding to the two default contactless payment applications are obtained by means of dividing by using a first demarcation limit value, and there is a second membership card application on the payment terminal. As shown in FIG. 13, the first obtaining unit 901 may include:
a second sending module 9014, configured to send second membership card information and the first demarcation limit value to the collection terminal, so that the collection terminal accumulates bill amounts of the user according to the second membership card information; queries a preset relationship between a membership card application and membership card information when an accumulated amount is greater than the first demarcation limit value, to obtain the second membership card application corresponding to the second membership card information; and sends the accumulated amount to the second membership card application by using the accumulated amount as the payment amount; and
a second obtaining module 9015, configured to obtain the payment amount from the second membership card application.

In conclusion, in the contactless payment apparatus provided in this embodiment of the present invention, a determining unit determines, according to a payment amount of a transaction, a limit interval within which the payment amount falls, a second obtaining unit obtains an application identifier of a first default payment application, and a sending unit sends the application identifier of the first default payment application to a collection terminal, so that the collection terminal completes the transaction with a payment terminal by using the payment application corresponding to the application identifier. A contactless application of a corresponding limit interval can be selected according to a transaction amount, and a user does not need to reset a default contactless payment application, thereby simplifying a payment process and improving payment efficiency.

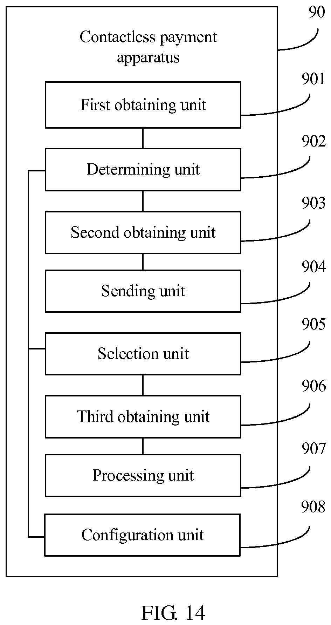

An embodiment of the present invention provides still another contactless payment apparatus 90, applied to a payment terminal. As shown in FIG. 14, the contactless payment apparatus 90 may include:
a first obtaining unit 901, configured to obtain a payment amount of a transaction;
a determining unit 902, configured to determine, from limit intervals corresponding to at least two default contactless payment applications, a limit interval within which the payment amount falls;
a second obtaining unit 903, configured to obtain an application identifier of a first default payment application, where the first default payment application is a default contactless payment application corresponding to the limit interval within which the payment amount falls;
a sending unit 904, configured to send the application identifier of the first default payment application to a collection terminal, so that the collection terminal completes the transaction with the payment terminal by using the payment application corresponding to the application identifier;
a selection unit 905, configured to select, from contactless payment applications on the payment terminal, at least two contactless payment applications as the at least two default contactless payment applications;
a third obtaining unit 906, configured to obtain at least one demarcation limit value; and
a processing unit 907, configured to obtain, according to the at least one demarcation limit value and an arrangement order of the at least two default contactless payment applications, the limit intervals corresponding to the at least two default contactless payment applications; and
a configuration unit 908, configured to: configure application identifiers of the at least two default contactless payment applications to be in a proximity payment system environment PPSE; or configure the application identifier of the first default payment application to be in a PPSE.

In conclusion, in the contactless payment apparatus provided in this embodiment of the present invention, a determining unit determines, according to a payment amount of a transaction, a limit interval within which the payment amount falls, a second obtaining unit obtains an application identifier of a first default payment application, and a sending unit sends the application identifier of the first default payment application to a collection terminal, so that the collection terminal completes the transaction with a payment terminal by using the payment application corresponding to the application identifier. A contactless application of a corresponding limit interval can be selected according to a transaction amount, and a user does not need to reset a default contactless payment application, thereby simplifying a payment process and improving payment efficiency.

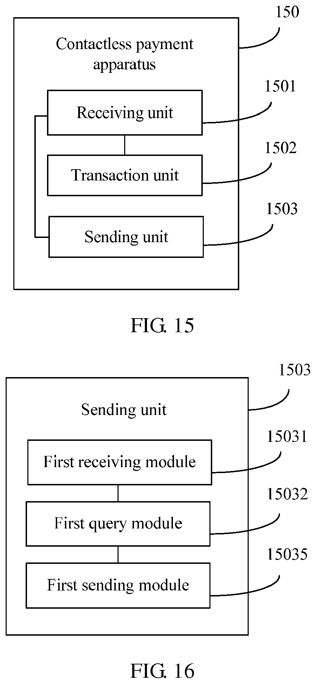

Another embodiment of the present invention provides a contactless payment apparatus 150, applied to a collection terminal. As shown in FIG. 15, the contactless payment apparatus 150 may include:
a receiving unit 1501, configured to receive an application identifier that is of a first default payment application and sent by a payment terminal, where there are at least two default contactless payment applications on the payment terminal, each default contactless payment application is corresponding to one limit interval, limit intervals corresponding to the at least two default contactless payment applications are consecutive and non-overlapping, and the first default payment application is obtained by determining, by the payment terminal after obtaining a payment amount of a transaction, a default contactless payment application corresponding to a limit interval within which the payment amount falls;
a transaction unit 1502, configured to complete the transaction with the payment terminal by using the payment application corresponding to the application identifier; and
a sending unit 1503, configured to send the payment amount to the payment terminal.

In conclusion, in the contactless payment apparatus provided in this embodiment of the present invention, a receiving unit receives an application identifier that is of a first default payment application and sent by a payment terminal, and a transaction unit completes a transaction with the payment terminal by using the payment application corresponding to the application identifier. A contactless application of a corresponding limit interval can be selected according to a transaction amount, and a user does not need to reset a default contactless payment application, thereby simplifying a payment process and improving payment efficiency.

As shown in FIG. 16, the sending unit 1503 may include:
a first receiving module 15031, configured to receive first membership card information sent by the payment terminal;
a first query module 15032, configured to query a preset relationship between a membership card application and membership card information according to the first membership card information, to obtain a first membership card application corresponding to the first membership card information; and
a first sending module 15033, configured to send the payment amount to the first membership card application on the payment terminal, so that the payment terminal obtains the payment amount from the first membership card application.

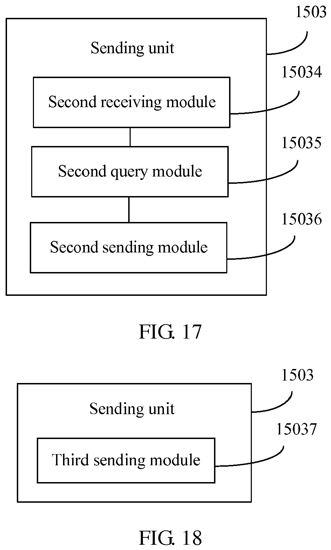

Exemplarily, there are two default contactless payment applications on the payment terminal, each default contactless payment application is corresponding to one limit interval, two limit intervals corresponding to the two default contactless payment applications are consecutive and non-overlapping, the two limit intervals corresponding to the two default contactless payment applications are obtained by means of dividing by using a first demarcation limit value, and there is a second membership card application on the payment terminal. As shown in FIG. 17, the sending unit 1503 may include:
a second receiving module 15034, configured to receive membership card information and the first demarcation limit value that are sent by the payment terminal;
a second query module 15035, configured to query a preset relationship between a membership card application and membership card information when an accumulated amount is greater than the first demarcation limit value, to obtain the second membership card application corresponding to the second membership card information; and
a second sending module 15036, configured to send the accumulated amount to the second membership card application on the payment terminal by using the accumulated amount as the payment amount, so that the payment terminal obtains the payment amount from the second membership card application.

As shown in FIG. 18, the sending unit 1503 may include:
a third sending module 15037, configured to: send the payment amount to the payment terminal by using a next generation system environment NGSE message; or send the payment amount to the payment terminal by using a Near Field Communication NFC message.

In conclusion, in the contactless payment apparatus provided in this embodiment of the present invention, a receiving unit receives an application identifier that is of a first default payment application and sent by a payment terminal, and a transaction unit completes a transaction with the payment terminal by using the payment application corresponding to the application identifier. A contactless application of a corresponding limit interval can be selected according to a transaction amount, and a user does not need to reset a default contactless payment application, thereby simplifying a payment process and improving payment efficiency.

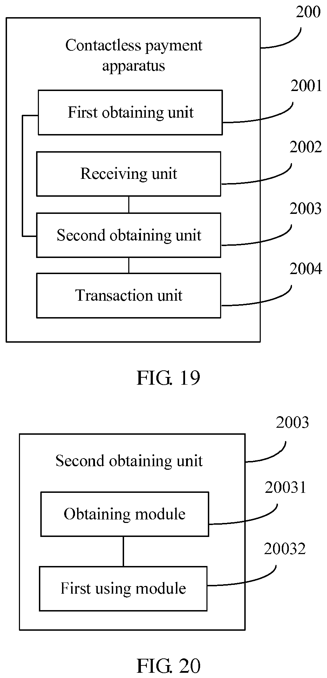

Another embodiment of the present invention provides another contactless payment apparatus 200, applied to a collection terminal. As shown in FIG. 19, the contactless payment apparatus 200 may include:
a first obtaining unit 2001, configured to obtain a payment amount of a transaction;
a receiving unit 2002, configured to receive application identifiers that are of at least two default contactless payment applications and sent by a payment terminal, where there are the at least two default contactless payment applications on the payment terminal, each default contactless payment application is corresponding to one limit interval, and limit intervals corresponding to the at least two default contactless payment applications are consecutive and non-overlapping;
a second obtaining unit 2003, configured to obtain an application identifier of a first default payment application according to the application identifiers of the at least two default contactless payment applications, where the first default payment application is a default contactless payment application corresponding to a limit interval within which the payment amount falls; and
a transaction unit 2004, configured to complete the transaction with the payment terminal by using the payment application corresponding to the application identifier.

In conclusion, in the contactless payment apparatus provided in this embodiment of the present invention, a first obtaining unit obtains a payment amount of a transaction; a receiving unit receives application identifiers that are of at least two default contactless payment applications and sent by a payment terminal; a second obtaining unit obtains, from the application identifiers of the at least two default contactless payment applications, an application identifier of a first default payment application corresponding to a limit interval within which the payment amount falls; and a transaction unit completes the transaction with the payment terminal by using the payment application corresponding to the application identifier. A contactless application of a corresponding limit interval can be selected according to a transaction amount, and a user does not need to reset a default contactless payment application, thereby simplifying a payment process and improving payment efficiency.

As shown in FIG. 20, the second obtaining unit 2003 may include:
an obtaining module 20031, configured to obtain the limit intervals corresponding to the at least two default contactless payment applications; and
a first using module 20032, configured to use, as the application identifier of the first default payment application according to a preset correspondence between an application identifier of a contactless payment application and a limit interval, an application identifier of the default contactless payment application corresponding to the limit interval within which the payment amount falls.

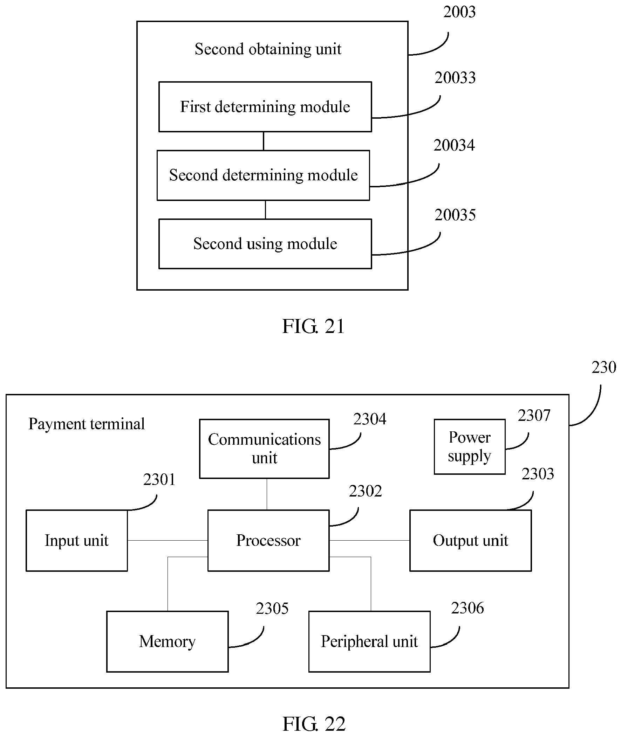

As shown in FIG. 21, the second obtaining unit 2003 may include:
a first determining module 20033, configured to determine, according to the application identifiers of the at least two default contactless payment applications, bank card types corresponding to the at least two default contactless payment applications;
a second determining module 20034, configured to determine, according to a preset correspondence between a bank card type and a limit interval, a bank card type corresponding to the limit interval within which the payment amount falls; and
a second using module 20035, configured to use an application identifier corresponding to the determined bank card type as the application identifier of the first default payment application according to the determined bank card type.

In conclusion, in the contactless payment apparatus provided in this embodiment of the present invention, a first obtaining unit obtains a payment amount of a transaction; a receiving unit receives application identifiers that are of at least two default contactless payment applications and sent by a payment terminal; a second obtaining unit obtains, from the application identifiers of the at least two default contactless payment applications, an application identifier of a first default payment application corresponding to a limit interval within which the payment amount falls; and a transaction unit completes the transaction with the payment terminal by using the payment application corresponding to the application identifier. A contactless application of a corresponding limit interval can be selected according to a transaction amount, and a user does not need to reset a default contactless payment application, thereby simplifying a payment process and improving payment efficiency.

An embodiment of the present invention provides a contactless payment system. The contactless payment system may include a payment terminal and a collection terminal. Specifically, the payment terminal may include any contactless payment apparatus 90 shown in FIG. 9, FIG. 10, or FIG. 14. The collection terminal may include the contactless payment apparatus 150 shown in FIG. 15.

In conclusion, in the contactless payment system provided in this embodiment of the present invention, a payment terminal selects, according to a payment amount of a transaction, a limit interval within which the payment amount falls and a default contactless payment application corresponding to the limit interval, so as to perform a corresponding payment action. A contactless application of a corresponding limit interval can be selected according to a transaction amount, and a user does not need to reset a default contactless payment application, thereby simplifying a payment process and improving payment efficiency.

An embodiment of the present invention provides another contactless payment system. The contactless payment system may include a payment terminal and a collection terminal. The collection terminal may include the contactless payment apparatus 200 shown in FIG. 19.

In conclusion, in the contactless payment system provided in this embodiment of the present invention, a collection terminal selects, according to a payment amount of a transaction, a limit interval within which the payment amount falls and a default contactless payment application corresponding to the limit interval, so that a corresponding payment action is performed. A contactless application of a corresponding limit interval can be selected according to a transaction amount, and a user does not need to reset a default contactless payment application, thereby simplifying a payment process and improving payment efficiency.

As shown in FIG. 22, another embodiment of the present invention provides still another contactless payment apparatus, applied to a payment terminal 230. There are at least two default contactless payment applications on the payment terminal 230. Each default contactless payment application is corresponding to one limit interval. Limit intervals corresponding to the at least two default contactless payment applications are consecutive and non-overlapping. The payment terminal 230 includes components such as an input unit 2301, a processor 2302, an output unit 2303, a communications unit 2304, a memory 2305, a peripheral unit 2306, and a power supply 2307. These components perform communication by using one or more buses. A person skilled in the art may understand that a structure of the payment terminal 230 shown in FIG. 22 does not constitute a limitation on the present invention. The structure may be a bus structure or may be a star structure; and may further include more or fewer components than those shown in the figure, or combine some parts, or have different parts arrangements. In this implementation manner of the present invention, the payment terminal 230 may be any mobile or portable payment terminal, and includes but is not limited to a mobile computer, a tablet computer, a personal digital assistant (Personal Digital Assistant, PDA for short), a smart watch, or a combination of two or more than two of the foregoing items.

The input unit 2301 is configured to: implement an interaction between a user and the payment terminal 230 and/or enter information into the payment terminal 230. For example, the input unit 2301 may receive digit or character information that is entered by a user, to generate signal input related to user set or function control. In a specific implementation manner of the present invention, the input unit 2301 may be a touch panel, may be another man-machine interaction interface, such as a substantive input key or a microphone, or may be another external information obtaining apparatus, such as a camera. The touch panel, also referred to as a touchscreen or a touchscreen, can collect an operation action of touching or approaching performed by the user on the touch panel, for example, an operation action performed by the user on the touch panel or at a location close to the touch panel by using a finger or any proper object or accessory such as a stylus; and drive a corresponding connection apparatus according to a preset program. Optionally, the touch panel may include two parts: a touch detection apparatus and a touch controller. The touch detection apparatus detects a touch operation of a user, converts the detected touch operation into an electrical signal, and transmits the electrical signal to the touch controller. The touch controller receives the electrical signal from the touch detection apparatus, and converts the electrical signal into contact coordinates, and then sends the contact coordinates to the processing unit. The touch controller may further receive and execute a command sent by the processing unit. In addition, the touch panel may be implemented in multiple types such as a resistive type, a capacitive type, an infrared (Infrared) type, and a surface acoustic wave type. In another implementation manner of the present invention, the substantive input key used by the input unit 2301 may include but is not limited to one or more of a physical keyboard, a function key (such as a volume control key or a power on/off key), a trackball, a mouse, a joystick, or the like. The input unit 2301 in a microphone form may collect a voice that is entered by a user or an environment, and convert the voice into a command that is in an electrical signal form and that can be executed by the processing unit.

The processor 2302 is a control center of the payment terminal 230, is connected to various parts of the entire payment terminal 230 by using various interfaces and lines, and implements various functions of the payment terminal 230 and/or processes data, by running or executing a software program and/or a module stored in the memory 2305 and invoking data stored in the memory 2305. The processor 2302 may include an integrated circuit (Integrated Circuit, IC for short), for example, a single packaged IC may be included, or multiple packaged ICs that are connected and with a same function or different functions may be included. For example, the processor 2302 may include only a central processing unit 2302 (Central Processing Unit, CPU for short), or may be a combination of a GPU, a digital signal processor 2302 (Digital Signal Processor, DSP for short), and a control chip (for example, a baseband chip) in the communications unit 2304. In this implementation manner of the present invention, the CPU may be a single operation core, or may include multiple operation cores.

The communications unit 2304 is configured to establish a communication channel, so that the payment terminal 230 is connected to a collection terminal by using the communication channel, and obtains corresponding information from the collection terminal. The communications unit 2304 may include a communications module, such as a wireless local network (Wireless Local Area Network, wireless LAN for short) module, a Bluetooth module, and a baseband (Baseband) module, and an NFC module, and a radio frequency (Radio Frequency, RF for short) circuit corresponding to the communications module; and is configured to perform wireless local area network communication, Bluetooth communication, infrared communication, and/or cellular communications system communication, such as Wideband Code Division Multiple Access (Wideband Code Division Multiple Access, W-CDMA for short) and/or High Speed Downlink Packet Access (High Speed Downlink Packet Access, HSDPA for short). The communications module is configured to control communication between all the components in the payment terminal 230, and may support direct memory access (Direct Memory Access).

In different implementation manners of the present invention, each communications module in the communications unit 2304 generally appears in a form of an integrated circuit chip (Integrated Circuit Chip), and may be combined selectively without a need of including all communications modules and corresponding antenna groups. For example, the communications unit 2304 may include only a baseband chip, a radio frequency chip, and a corresponding antenna, to provide a communication function in a cellular communications system. The payment terminal 230 may be connected to a cellular network (Cellular Network) or the Internet (Internet) by means of a wireless communication connection such as wireless local area network access or WCDMA access that is established by the communications unit 2304. In some optional implementation manners of the present invention, a communications module in the communications unit 2304, for example, a baseband module, may be integrated into the processor 2302, typically, such as an APQ+MDM platform provided by Qualcomm (Qualcomm).

The radio frequency circuit is configured to receive and send information, or receive and send a signal during a call. For example, after receiving downlink information from a base station, the radio frequency circuit sends the downlink information to the processing unit for processing. In addition, the radio frequency circuit sends designed uplink data to the base station. Generally, the radio frequency circuit includes a well-known circuit configured to implement these functions, and includes but is not limited to an antenna system, a radio frequency transceiver, one or more amplifiers, a tuner, one or more oscillators, a digital signal processor, a codec (Codec) chipset, a subscriber identity module (SIM) card, a memory, and the like. In addition, the radio frequency circuit may further communicate with a network and another device by means of wireless communication. The wireless communication may use any communication standard or protocol, including but not being limited to a Global System for Mobile Communications (Global System for Mobile communications, GSM for short), a general packet radio service (General Packet Radio Service, GPRS for short), Code Division Multiple Access (Code Division Multiple Access, CDMA for short), Wideband Code Division Multiple Access (Wideband Code Division Multiple Access, WCDMA for short), a High Speed Uplink Packet Access (High Speed Uplink Packet Access, HSUPA for short) technology, Long Term Evolution (Long Term Evolution, LTE for short), email, a short message service (Short Message Service, SMS for short), and the like.

The output unit 2303 includes but is not limited to an image output unit and a voice output unit. The image output unit is configured to output a text, a picture, and/or a video. The image output unit may include a display panel, for example, a display panel configured in a form of a liquid crystal display (Liquid Crystal Display, LCD for short), an organic light-emitting diode (Organic Light-Emitting Diode, OLED for short), a field emission display (field emission display, FED for short), or the like. Alternatively, the image output unit may include a reflective display, for example, an electrophoretic (electrophoretic) display, or a display using an interferometric modulation of light (Interferometric Modulation of Light) technology. The image output unit may include a single display or multiple displays in different sizes. In a specific implementation manner of the present invention, the touch panel used by the input unit 2301 may also be used as a display panel of the output unit 2303. For example, after detecting a gesture operation of touching or approaching the touch panel, the touch panel transmits the gesture operation to the processing unit to determine a touch event type, and then the processing unit provides corresponding visual output on the display panel according to the touch event type. In FIG. 22, the input unit 2301 and the output unit 2303 are used as two independent parts to implement input and output functions of the payment terminal 230, but in some embodiments, the touch panel and the display panel may be integrated to implement the input and output functions of the payment terminal 230. For example, the image output unit may display various graphical user interfaces (Graphical User Interface, GUI for short) as virtual control components, so that a user performs an operation in a touch manner. The various graphical user interfaces include but are not limited to a window, a scroll bar, an icon, and a clipboard.

In a specific implementation manner of the present invention, the image output unit includes: a filter and an amplifier, configured to filter and amplify a video that is output by the processing unit. The audio output unit includes a digital-to-analog converter, configured to convert, from a digital format to an analog format, an audio signal output by the processing unit.

The memory 2305 may be configured to store a software program and a module, and the processing unit executes various functional applications of the payment terminal 230 and implements data processing, by running the software program and the module that are stored in the memory 2305. The memory 2305 mainly includes a program storage area and a data storage area. The program storage area may store an operating system, and an application program such as a sound playing program or an image playing program that is required by at least one function. The data storage area may store data (such as audio data or a phone book) that is created according to use of the payment terminal 230, and the like. In a specific implementation manner of the present invention, the memory 2305 may include a volatile memory 2305, such as a nonvolatile random access memory (Nonvolatile Random Access Memory, NVRAM for short), a phase change random access memory (Phase Change RAM, PRAM for short), or a magnetoresistive random access memory (Magetoresistive RAM, MRAM for short); or may include a nonvolatile memory, such as at least one magnetic disk storage component, an electrically erasable programmable read-only memory (Electrically Erasable Programmable Read-Only Memory, EEPROM for short), or a flash memory component such as NOR flash memory (NOR flash memory) or NAND flash memory (NAND flash memory). The nonvolatile memory stores an operating system and an application program executed by the processing unit. The processing unit loads a running program and data from the nonvolatile memory into a memory, and stores digital content in a large-capacity storage apparatus. The operating system includes various components and/or drives that are configured to control and manage a conventional system task such as memory management, storage device control, or power management, and facilitate communication between various software and hardware. In this implementation manner of the present invention, the operating system may be an Android system of Google, an iOS system developed by Apple, a Windows operating system developed by Microsoft, or the like; or an embedded operating system such as VxWorks.

The application program includes any application installed on the payment terminal 230, and includes but is not limited to a browser, an email, an instant message service, word processing, keyboard virtualization, a widget (Widget), encryption, digital copyright management, voice recognition, voice reproduction, positioning (for example, a function provided by a Global Positioning System), music playback, and the like. In some implementation manners, the memory 2305 stores a program. The program can be executed by the processor 2302, and this program includes:
obtaining a payment amount of a transaction;
determining, from the at least two consecutive and non-overlapping limit intervals corresponding to the at least two default contactless payment applications, a limit interval within which the payment amount falls;
obtaining an application identifier of a first default payment application, where the first default payment application is a default contactless payment application corresponding to the limit interval within which the payment amount falls; and
sending the application identifier of the first default payment application to a collection terminal, so that the collection terminal completes the transaction with the payment terminal 230 by using the payment application corresponding to the application identifier.

Optionally, the at least two default contactless payment applications are sequentially arranged in a payable-limit-based order or a priority-based order, and before the obtaining a payment amount of a transaction, the method further includes:
selecting, from contactless payment applications on the payment terminal 230, at least two contactless payment applications as the at least two default contactless payment applications;
obtaining at least one demarcation limit value; and
obtaining, according to the at least one demarcation limit value and an arrangement order of the at least two default contactless payment applications, the limit intervals corresponding to the at least two default contactless payment applications.

Optionally, the obtaining the at least one demarcation limit value includes:
obtaining at least one preset demarcation limit value as the at least one demarcation limit value; or
receiving, as the at least one demarcation limit value, at least one demarcation limit value that is set by a user; or
obtaining an actual payable limit of at least one default contactless payment application of the at least two default contactless payment applications as the at least one demarcation limit value.

Optionally, there is a first membership card application on the payment terminal 230, and
the obtaining a payment amount of a transaction includes:
sending the first membership card information to the collection terminal, so that the collection terminal queries a preset relationship between a membership card application and membership card information according to the first membership card information, to obtain the first membership card application corresponding to the first membership card information, and sends the payment amount to the first membership card application; and
obtaining the payment amount from the first membership card application.

Optionally, there are two default contactless payment applications on the payment terminal 230, each default contactless payment application is corresponding to one limit interval, two limit intervals corresponding to the two default contactless payment applications are consecutive and non-overlapping, the two limit intervals corresponding to the two default contactless payment applications are obtained by means of dividing by using a first demarcation limit value, and there is a second membership card application on the payment terminal 230.

The obtaining a payment amount of a transaction includes:
sending second membership card information and the first demarcation limit value to the collection terminal, so that the collection terminal accumulates bill amounts of the user according to the second membership card information; queries a preset relationship between a membership card application and membership card information when an accumulated amount is greater than the first demarcation limit value, to obtain the second membership card application corresponding to the second membership card information; and sends the accumulated amount to the second membership card application by using the accumulated amount as the payment amount; and
obtaining the payment amount from the second membership card application.

Optionally, the obtaining a payment amount of a transaction includes:
receiving, by using a next generation system environment NGSE message, the payment amount sent by the collection terminal; or
receiving, by using a Near Field Communication NFC message, the payment amount sent by the collection terminal.

Optionally, before the sending the application identifier of the first default payment application to a collection terminal, the method further includes:
configuring application identifiers of the at least two default contactless payment applications to be in a proximity payment system environment PPSE; or
configuring the application identifier of the first default payment application to be in the PPSE.

The power supply 2307 is configured to supply power to different parts of the payment terminal 230 to maintain running of the parts. Generally, the power supply 2307 may be a built-in battery such as a common lithium-ion battery or a nickel-hydrogen battery, or includes an external power supply such as an AC adapter that directly supplies power to the payment terminal 230. In some implementation manners of the present invention, a wider definition may be further provided for the power supply 2307, for example, a power management system, a charging system, a power fault detection circuit, a power converter or inverter, a power status indicator (such as a light-emitting diode), and any other components that are related to electric energy generation, management, and distribution of the payment terminal 230 may be further included.

In conclusion, in the contactless payment apparatus provided in this embodiment of the present invention, a processor determines, according to a payment amount of a transaction, a limit interval within which the payment amount falls; the processor obtains an application identifier of a first default payment application; and a communications unit sends the application identifier of the first default payment application to a collection terminal, so that the collection terminal completes the transaction with a payment terminal by using the payment application corresponding to the application identifier. A contactless application of a corresponding limit interval can be selected according to a transaction amount, and a user does not need to reset a default contactless payment application, thereby simplifying a payment process and improving payment efficiency.

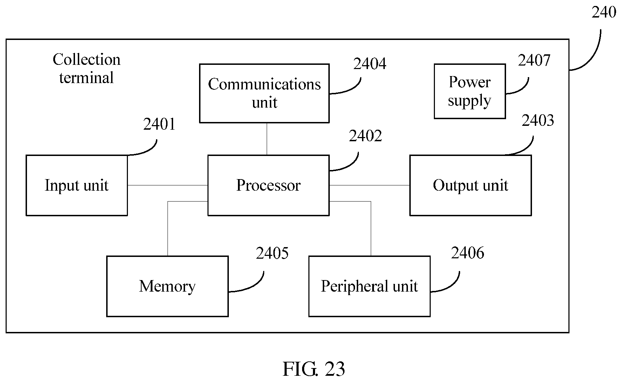

As shown in FIG. 23, another embodiment of the present invention provides yet another contactless payment apparatus, applied to a collection terminal 240. The collection terminal 240 includes components such as an input unit 2401, a processor 2402, an output unit 2403, a communications unit 2404, a memory 2405, a peripheral unit 2406, and a power supply 2407. These components perform communication by using one or more buses. A person skilled in the art may understand that a structure of the collection terminal 240 shown in FIG. 23 does not constitute a limitation on the present invention. The structure may be a bus structure or may be a star structure; and may further include more or fewer components than those shown in the figure, or combine some parts, or have different parts arrangements. In this implementation manner of the present invention, the collection terminal 240 may be any mobile or portable collection terminal, includes but is not limited to a contactless POS machine, a server associated with a contactless POS machine, or a combination of two or more than two of the foregoing items.

The input unit 2401 is configured to: implement an interaction between a user and the collection terminal 240 and/or enter information into the collection terminal 240. For example, the input unit 2401 may receive digit or character information that is entered by a user, to generate signal input related to user set or function control. In a specific implementation manner of the present invention, the input unit 2401 may be a touch panel, may be another man-machine interaction interface, such as a substantive input key or a microphone, or may be another external information obtaining apparatus, such as a camera. The touch panel, also referred to as a touchscreen, can collect an operation action of touching or approaching performed by the user on the touch panel, for example, an operation action performed by the user on the touch panel or at a location close to the touch panel by using a finger or any proper object or accessory such as a stylus; and drive a corresponding connection apparatus according to a preset program. Optionally, the touch panel may include two parts: a touch detection apparatus and a touch controller. The touch detection apparatus detects a touch operation of a user, converts the detected touch operation into an electrical signal, and transmits the electrical signal to the touch controller. The touch controller receives the electrical signal from the touch detection apparatus, and converts the electrical signal into contact coordinates, and then sends the contact coordinates to the processing unit. The touch controller may further receive and execute a command sent by the processing unit. In addition, the touch panel may be implemented in multiple types such as a resistive type, a capacitive type, an infrared (Infrared) type, and a surface acoustic wave type. In another implementation manner of the present invention, the substantive input key used by the input unit 2401 may include but is not limited to one or more of a physical keyboard, a function key (such as a volume control key or a power on/off key), a trackball, a mouse, a joystick, or the like. The input unit 2401 in a microphone form may collect a voice that is entered by a user or an environment, and convert the voice into a command that is in an electrical signal form and that can be executed by the processing unit.

In other implementation manners of the present invention, the input unit 2401 may further be various types of sensing components, such as Hall component that is configured to detect a physical quantity of the collection terminal 240, such as a force, a torque, pressure, a stress, a location, a displacement, a speed, an acceleration, an angle, an angular velocity, a rotational quantity, a rotational speed, or a time at which a working status changes. The input unit 2401 converts the physical quantity into an electric quantity for detection and control. Other sensing components may further include a gravity sensor, a tri-axis accelerometer, a gyroscope, and the like.

The processor 2402 is a control center of the collection terminal 240, is connected to various parts of the entire collection terminal 240 by using various interfaces and lines, and implements various functions of the collection terminal 240 and/or processes data, by running or executing a software program and/or a module stored in the memory 2405 and invoking data stored in the memory 2405. The processor 2402 may include an integrated circuit (Integrated Circuit, IC for short), for example, a single packaged IC may be included, or multiple packaged ICs that are connected and with a same function or different functions may be included. For example, the processor 2402 may include only a central processing unit (Central Processing Unit, CPU for short), or may be a combination of a GPU, a digital signal processor (Digital Signal Processor, DSP for short), and a control chip (for example, a baseband chip) in the communications unit 2404. In this implementation manner of the present invention, the CPU may be a single operation core, or may include multiple operation cores.

The communications unit 2404 is configured to establish a communication channel, so that the collection terminal 240 is connected to the collection terminal 240 by using the communication channel, and obtains corresponding information from the collection terminal 240. The communications unit 2404 may include a communications module, such as a wireless local network (Wireless Local Area Network, wireless LAN for short) module, a Bluetooth module, and a baseband (Baseband) module, and an NFC module, and a radio frequency (Radio Frequency, RF for short) circuit corresponding to the communications module; and is configured to perform wireless local area network communication, Bluetooth communication, infrared communication, and/or cellular communications system communication, such as Wideband Code Division Multiple Access (Wideband Code Division Multiple Access, W-CDMA for short) and/or High Speed Downlink Packet Access (High Speed Downlink Packet Access, HSDPA for short). The communications module is configured to control communication between all the components in the collection terminal 240, and may support direct memory access (Direct Memory Access).

In different implementation manners of the present invention, each communications module in the communications unit 2404 generally appears in a form of an integrated circuit chip (Integrated Circuit Chip), and may be combined selectively without a need of including all communications modules and corresponding antenna groups. For example, the communications unit 2404 may include only a baseband chip, a radio frequency chip, and a corresponding antenna, to provide a communication function in a cellular communications system. The collection terminal 240 may be connected to a cellular network (Cellular Network) or the Internet (Internet) by means of a wireless communication connection such as wireless local area network access or WCDMA access that is established by the communications unit 2404. In some optional implementation manners of the present invention, a communications module in the communications unit 2404, for example, a baseband module, may be integrated into the processor 2402, typically, such as an APQ+MDM platform provided by Qualcomm (Qualcomm).

The radio frequency circuit is configured to receive and send information, or receive and send a signal during a call. For example, after receiving downlink information from a base station, the radio frequency circuit sends the downlink information to the processing unit for processing. In addition, the radio frequency circuit sends designed uplink data to the base station. Generally, the radio frequency circuit includes a well-known circuit configured to implement these functions, and includes but is not limited to an antenna system, a radio frequency transceiver, one or more amplifiers, a tuner, one or more oscillators, a digital signal processor, a codec (Codec) chipset, a subscriber identity module (SIM) card, a memory, and the like. In addition, the radio frequency circuit may further communicate with a network and another device by means of wireless communication. The wireless communication may use any communication standard or protocol, including but not being limited to a Global System for Mobile Communications (Global System for Mobile communications, GSM for short), a general packet radio service (General Packet Radio Service, GPRS for short), Code Division Multiple Access (Code Division Multiple Access, CDMA for short), Wideband Code Division Multiple Access (Wideband Code Division Multiple Access, WCDMA for short), a High Speed Uplink Packet Access (High Speed Uplink Packet Access, HSUPA for short) technology, Long Term Evolution (Long Term Evolution, LTE for short), email, a short message service (Short Message Service, SMS for short), and the like.

The output unit 2403 includes but is not limited to an image output unit and a voice output unit. The image output unit is configured to output a text, a picture, and/or a video. The image output unit may include a display panel, for example, a display panel configured in a form of a liquid crystal display (Liquid Crystal Display, LCD for short), an organic light-emitting diode (Organic Light-Emitting Diode, OLED for short), a field emission display (field emission display, FED for short), or the like. Alternatively, the image output unit may include a reflective display, for example, an electrophoretic (electrophoretic) display, or a display using an interferometric modulation of light (Interferometric Modulation of Light) technology. The image output unit may include a single display or multiple displays in different sizes. In a specific implementation manner of the present invention, the touch panel used by the input unit 2401 may also be used as a display panel of the output unit 2403. For example, after detecting a gesture operation of touching or approaching the touch panel, the touch panel transmits the gesture operation to the processing unit to determine a touch event type, and then the processing unit provides corresponding visual output on the display panel according to the touch event type. In FIG. 23, the input unit 2401 and the output unit 2403 are used as two independent parts to implement input and output functions of the collection terminal 240, but in some embodiments, the touch panel and the display panel may be integrated to implement the input and output functions of the collection terminal 240. For example, the image output unit may display various graphical user interfaces (Graphical User Interface, GUI for short) as virtual control components, so that a user performs an operation in a touch manner. The various graphical user interfaces include but are not limited to a window, a scroll bar, an icon, and a clipboard.

In a specific implementation manner of the present invention, the image output unit includes: a filter and an amplifier, configured to filter and amplify a video that is output by the processing unit. The audio output unit includes a digital-to-analog converter, configured to convert, from a digital format to an analog format, an audio signal output by the processing unit.

The memory 2405 may be configured to store a software program and a module, and the processing unit executes various functional applications of the collection terminal 240 and implements data processing, by running the software program and the module that are stored in the memory 2405. The memory 2405 mainly includes a program storage area and a data storage area. The program storage area may store an operating system, and an application program such as a sound playing program or an image playing program that is required by at least one function. The data storage area may store data (such as audio data or a phone book) that is created according to use of the collection terminal 240, and the like. In a specific implementation manner of the present invention, the memory 2405 may include a volatile memory, such as a nonvolatile random access memory (Nonvolatile Random Access Memory, NVRAM for short), a phase change random access memory (Phase Change RAM, PRAM for short), or a magnetoresistive random access memory (Magetoresistive RAM, MRAM for short); or may include a nonvolatile memory, such as at least one magnetic disk storage component, an electrically erasable programmable read-only memory (Electrically Erasable Programmable Read-Only Memory, EEPROM for short), or a flash memory component such as NOR flash memory (NOR flash memory) or NAND flash memory (NAND flash memory). The nonvolatile memory stores an operating system and an application program executed by the processing unit. The processing unit loads a running program and data from the nonvolatile memory into a memory, and stores digital content in a large-capacity storage apparatus. The operating system includes various components and/or drives that are configured to control and manage a conventional system task such as memory management, storage device control, or power management, and facilitate communication between various software and hardware. In this implementation manner of the present invention, the operating system may be an Android system of Google, an iOS system developed by Apple, a Windows operating system developed by Microsoft, or the like; or an embedded operating system such as VxWorks.

The application program includes any application installed on the collection terminal 240, and includes but is not limited to a browser, an email, an instant message service, word processing, keyboard virtualization, a widget (Widget), encryption, digital copyright management, voice recognition, voice reproduction, positioning (for example, a function provided by a Global Positioning System), music playback, and the like.

In some implementation manners, the memory 2405 stores a program. The program can be executed by the processor 2402.

According to one aspect, this program may include:
sending a payment amount to a payment terminal;
receiving an application identifier that is of a first default payment application and sent by the payment terminal, where there are at least two default contactless payment applications on the payment terminal, each default contactless payment application is corresponding to one limit interval, at least two limit intervals corresponding to the at least two default contactless payment applications are consecutive and non-overlapping, and the first default payment application is obtained by determining, by the payment terminal after obtaining the payment amount of a transaction, a default contactless payment application corresponding to a limit interval within which the payment amount falls; and
completing the transaction with the payment terminal by using the payment application corresponding to the application identifier.

Optionally, there is a first membership card application on the payment terminal, and the sending a payment amount to a payment terminal includes:
receiving first membership card information sent by the payment terminal;
querying a preset relationship between a membership card application and membership card information according to the first membership card information, to obtain the first membership card application corresponding to the first membership card information; and
sending the payment amount to the first membership card application on the payment terminal, so that the payment terminal obtains the payment amount from the first membership card application.

Optionally, there are two default contactless payment applications on the payment terminal, each default contactless payment application is corresponding to one limit interval, two limit intervals corresponding to the two default contactless payment applications are consecutive and non-overlapping, the two limit intervals corresponding to the two default contactless payment applications are obtained by means of dividing by using a first demarcation limit value, and there is a second membership card application on the payment terminal.

The sending a payment amount to a payment terminal includes:
receiving second membership card information and the first demarcation limit value that are sent by the payment terminal;
querying a preset relationship between a membership card application and membership card information when an accumulated amount is greater than the first demarcation limit value, to obtain the second membership card application corresponding to the second membership card information; and
sending the accumulated amount to the second membership card application on the payment terminal by using the accumulated amount as the payment amount, so that the payment terminal obtains the payment amount from the second membership card application.

Optionally, the sending the payment amount to the payment terminal includes:
sending the payment amount to the payment terminal by using a next generation system environment NGSE message; or
sending the payment amount to the payment terminal by using a Near Field Communication NFC message.

According to another aspect, this program may include:
obtaining a payment amount of a transaction;
receiving application identifiers that are of at least two default contactless payment applications and sent by a payment terminal, where there are the at least two default contactless payment applications on the payment terminal, each default contactless payment application is corresponding to one limit interval, and limit intervals corresponding to the at least two default contactless payment applications are consecutive and non-overlapping;
obtaining an application identifier of a first default payment application according to the application identifiers of the at least two default contactless payment applications, where the first default payment application is a default contactless payment application corresponding to a limit interval within which the payment amount falls; and
completing the transaction with the payment terminal by using the payment application corresponding to the application identifier.

Optionally, the obtaining an application identifier of a first default payment application according to the application identifiers of the at least two default contactless payment applications includes:
obtaining the limit intervals corresponding to the at least two default contactless payment applications; and
using, as the application identifier of the first default payment application according to a preset correspondence between an application identifier of a contactless payment application and a limit interval, an application identifier of the default contactless payment application corresponding to the limit interval within which the payment amount falls.

Optionally, the obtaining an application identifier of a first default payment application according to the application identifiers of the at least two default contactless payment applications includes:
determining, according to the application identifiers of the at least two default contactless payment applications, bank card types corresponding to the at least two default contactless payment applications;
determining, according to a preset correspondence between a bank card type and a limit interval, a bank card type corresponding to the limit interval within which the payment amount falls; and
using an application identifier corresponding to the determined bank card type as the application identifier of the first default payment application according to the determined bank card type.

The power supply 2407 is configured to supply power to different parts of the collection terminal 240 to maintain running of the parts. Generally, the power supply 2407 may be a built-in battery such as a common lithium-ion battery or a nickel-hydrogen battery, or includes an external power supply such as an AC adapter that directly supplies power to the collection terminal 240. In some implementation manners of the present invention, a wider definition may be provided for the power supply 2407, for example, a power management system, a charging system, a power fault detection circuit, a power converter or inverter, a power status indicator (such as a light-emitting diode), and any other components that are related to electric energy generation, management, and distribution of the collection terminal 240 may be further included.

In conclusion, in the contactless payment apparatus provided in this embodiment of the present invention, an input unit receives an application identifier that is of a first default payment application and sent by a payment terminal, and a processor completes a transaction with the payment terminal by using the payment application corresponding to the application identifier. A contactless application of a corresponding limit interval can be selected according to a transaction amount, and a user does not need to reset a default contactless payment application, thereby simplifying a payment process and improving payment efficiency.

An embodiment of the present invention provides still another contactless payment system. The contactless payment system may include the payment terminal 230 shown in FIG. 22 and/or the collection terminal 240 shown in FIG. 23.

In conclusion, in the contactless payment system provided in this embodiment of the present invention, a payment terminal selects, according to a payment amount of a transaction, a limit interval within which the payment amount falls and a default contactless payment application corresponding to the limit interval, so as to perform a corresponding payment action. A contactless application of a corresponding limit interval can be selected according to a transaction amount, and a user does not need to reset a default contactless payment application, thereby simplifying a payment process and improving payment efficiency.

The foregoing descriptions are merely embodiments of the present invention, but are not intended to limit the present invention. Any modification, equivalent replacement, or improvement made without departing from the spirit and principle of the present invention should fall within the protection scope of the present invention.

## Claims

1. A contactless payment method, applied to a payment terminal, wherein there are at least two default contactless payment applications on the payment terminal, each default contactless payment application is corresponding to one limit interval, and the method comprises:
obtaining a payment amount of a transaction;
determining, from at least two consecutive and non-overlapping limit intervals corresponding to the at least two default contactless payment applications, a limit interval within which the payment amount falls;
obtaining an application identifier of a first default payment application, wherein the first default payment application is a default contactless payment application corresponding to the limit interval within which the payment amount falls; and
sending the application identifier of the first default payment application to a collection terminal, so that the collection terminal completes the transaction with the payment terminal by using the payment application corresponding to the application identifier.

2. The method according to claim 1, wherein the at least two default contactless payment applications are sequentially arranged in a payable-limit-based order or a priority-based order, and before the obtaining a payment amount of a transaction, the method further comprises:
selecting, from contactless payment applications on the payment terminal, at least two contactless payment applications as the at least two default contactless payment applications;
obtaining at least one demarcation limit value; and
obtaining, according to the at least one demarcation limit value and an arrangement order of the at least two default contactless payment applications, the limit intervals corresponding to the at least two default contactless payment applications.

3. The method according to claim 2, wherein
the obtaining at least one demarcation limit value comprises:
obtaining at least one preset demarcation limit value as the at least one demarcation limit value; or
receiving, as the at least one demarcation limit value, at least one demarcation limit value that is set by a user; or
obtaining an actual payable limit of at least one of the at least two default contactless payment applications as the at least one demarcation limit value.

4. The method according to any one of claims 1 to 3, wherein there is a first membership card application on the payment terminal, and
the obtaining a payment amount of a transaction comprises:
sending the first membership card information to the collection terminal, so that the collection terminal queries a preset relationship between a membership card application and membership card information according to the first membership card information, to obtain the first membership card application corresponding to the first membership card information, and sends the payment amount to the first membership card application; and
obtaining the payment amount from the first membership card application.

5. The method according to any one of claims 1 to 3, wherein there are two default contactless payment applications on the payment terminal, each default contactless payment application is corresponding to one limit interval, two limit intervals corresponding to the two default contactless payment applications are consecutive and non-overlapping, the two limit intervals corresponding to the two default contactless payment applications are obtained by means of dividing by using a first demarcation limit value, and there is a second membership card application on the payment terminal; and
the obtaining a payment amount of a transaction comprises:
sending second membership card information and the first demarcation limit value to the collection terminal, so that the collection terminal accumulates bill amounts of the user according to the second membership card information; queries a preset relationship between a membership card application and membership card information when an accumulated amount is greater than the first demarcation limit value, to obtain the second membership card application corresponding to the second membership card information; and sends the accumulated amount to the second membership card application by using the accumulated amount as the payment amount; and
obtaining the payment amount from the second membership card application.

6. The method according to any one of claims 1 to 3, wherein the obtaining a payment amount of a transaction comprises:
receiving, by using a next generation system environment NGSE message, the payment amount sent by the collection terminal; or
receiving, by using a Near Field Communication NFC message, the payment amount sent by the collection terminal.

7. The method according to claim 1, wherein before the sending the application identifier of the first default payment application to a collection terminal, the method further comprises:
configuring application identifiers of the at least two default contactless payment applications to be in a proximity payment system environment PPSE; or
configuring the application identifier of the first default payment application to be in the PPSE.

8. A contactless payment method, applied to a collection terminal, wherein the method comprises:
sending a payment amount to a payment terminal;
receiving an application identifier that is of a first default payment application and sent by the payment terminal, wherein there are at least two default contactless payment applications on the payment terminal, each default contactless payment application is corresponding to one limit interval, at least two limit intervals corresponding to the at least two default contactless payment applications are consecutive and non-overlapping, and the first default payment application is obtained by determining, by the payment terminal after obtaining the payment amount of a transaction, a default contactless payment application corresponding to a limit interval within which the payment amount falls; and
completing the transaction with the payment terminal by using the payment application corresponding to the application identifier.

9. The method according to claim 8, wherein there is a first membership card application on the payment terminal, and the sending a payment amount to a payment terminal comprises:
receiving first membership card information sent by the payment terminal;
querying a preset relationship between a membership card application and membership card information according to the first membership card information, to obtain the first membership card application corresponding to the first membership card information; and
sending the payment amount to the first membership card application on the payment terminal, so that the payment terminal obtains the payment amount from the first membership card application.

10. The method according to claim 8, wherein there are two default contactless payment applications on the payment terminal, each default contactless payment application is corresponding to one limit interval, two limit intervals corresponding to the two default contactless payment applications are consecutive and non-overlapping, the two limit intervals corresponding to the two default contactless payment applications are obtained by means of dividing by using a first demarcation limit value, and there is a second membership card application on the payment terminal; and
the sending a payment amount to a payment terminal comprises:
receiving second membership card information and the first demarcation limit value that are sent by the payment terminal;
querying a preset relationship between a membership card application and membership card information when an accumulated amount is greater than the first demarcation limit value, to obtain the second membership card application corresponding to the second membership card information; and
sending the accumulated amount to the second membership card application on the payment terminal by using the accumulated amount as the payment amount, so that the payment terminal obtains the payment amount from the second membership card application.

11. The method according to any one of claims 8 to 10, wherein the sending a payment amount to a payment terminal comprises:
sending the payment amount to the payment terminal by using a next generation system environment NGSE message; or
sending the payment amount to the payment terminal by using a Near Field Communication NFC message.

12. A contactless payment method, applied to a collection terminal, wherein the method comprises:
obtaining a payment amount of a transaction;
receiving application identifiers that are of at least two default contactless payment applications and sent by a payment terminal, wherein there are the at least two default contactless payment applications on the payment terminal, each default contactless payment application is corresponding to one limit interval, and limit intervals corresponding to the at least two default contactless payment applications are consecutive and non-overlapping;
obtaining an application identifier of a first default payment application according to the application identifiers of the at least two default contactless payment applications, wherein the first default payment application is a default contactless payment application corresponding to a limit interval within which the payment amount falls; and
completing the transaction with the payment terminal by using the payment application corresponding to the application identifier.

13. The method according to claim 12, wherein the obtaining an application identifier of a first default payment application according to the application identifiers of the at least two default contactless payment applications comprises:
obtaining the limit intervals corresponding to the at least two default contactless payment applications; and
using, as the application identifier of the first default payment application according to a preset correspondence between an application identifier of a contactless payment application and a limit interval, an application identifier of the default contactless payment application corresponding to the limit interval within which the payment amount falls.

14. The method according to claim 12, wherein the obtaining an application identifier of a first default payment application according to the application identifiers of the at least two default contactless payment applications comprises:
determining, according to the application identifiers of the at least two default contactless payment applications, bank card types corresponding to the at least two default contactless payment applications;
determining, according to a preset correspondence between a bank card type and a limit interval, a bank card type corresponding to the limit interval within which the payment amount falls; and
using an application identifier corresponding to the determined bank card type as the application identifier of the first default payment application according to the determined bank card type.

15. A contactless payment apparatus, applied to a payment terminal, wherein there are at least two default contactless payment applications on the payment terminal, each default contactless payment application is corresponding to one limit interval, and the contactless payment apparatus comprises:
a first obtaining unit, configured to obtain a payment amount of a transaction;
a determining unit, configured to determine, from at least two consecutive and non-overlapping limit intervals corresponding to the at least two default contactless payment applications, a limit interval within which the payment amount falls;
a second obtaining unit, configured to obtain an application identifier of a first default payment application, wherein the first default payment application is a default contactless payment application corresponding to the limit interval within which the payment amount falls; and
a sending unit, configured to send the application identifier of the first default payment application to a collection terminal, so that the collection terminal completes the transaction with the payment terminal by using the payment application corresponding to the application identifier.

16. The contactless payment apparatus according to claim 15, wherein the at least two default contactless payment applications are sequentially arranged in a payable-limit-based order or a priority-based order, and the contactless payment apparatus further comprises:
a selection unit, configured to select, from contactless payment applications on the payment terminal, at least two contactless payment applications as the at least two default contactless payment applications;
a third obtaining unit, configured to obtain at least one demarcation limit value; and
a processing unit, configured to obtain, according to the at least one demarcation limit value and an arrangement order of the at least two default contactless payment applications, the limit intervals corresponding to the at least two default contactless payment applications.

17. The contactless payment apparatus according to claim 16, wherein
the third obtaining unit is specifically configured to:
obtain at least one preset demarcation limit value as the at least one demarcation limit value; or
receive, as the at least one demarcation limit value, at least one demarcation limit value that is set by a user; or
obtain an actual payable limit of at least one of the at least two default contactless payment applications as the at least one demarcation limit value.

18. The contactless payment apparatus according to any one of claims 15 to 17, wherein there is a first membership card application on the payment terminal, and
the first obtaining unit comprises:
a first sending module, configured to send the first membership card information to the collection terminal, so that the collection terminal queries a preset relationship between a membership card application and membership card information according to the first membership card information, to obtain the first membership card application corresponding to the first membership card information, and sends the payment amount to the first membership card application; and
a first obtaining module, configured to obtain the payment amount from the first membership card application.

19. The contactless payment apparatus according to any one of claims 15 to 17, wherein there are two default contactless payment applications on the payment terminal, each default contactless payment application is corresponding to one limit interval, two limit intervals corresponding to the two default contactless payment applications are consecutive and non-overlapping, the two limit intervals corresponding to the two default contactless payment applications are obtained by means of dividing by using a first demarcation limit value, and there is a second membership card application on the payment terminal; and
the first obtaining unit comprises:
a second sending module, configured to send second membership card information and the first demarcation limit value to the collection terminal, so that the collection terminal accumulates bill amounts of the user according to the second membership card information; queries a preset relationship between a membership card application and membership card information when an accumulated amount is greater than the first demarcation limit value, to obtain the second membership card application corresponding to the second membership card information; and sends the accumulated amount to the second membership card application by using the accumulated amount as the payment amount; and
a second obtaining module, configured to obtain the payment amount from the second membership card application.

20. The contactless payment apparatus according to any one of claims 15 to 17, wherein the first obtaining unit comprises:
a first receiving module, configured to: receive, by using a next generation system environment NGSE message, the payment amount sent by the collection terminal; or
receive, by using a Near Field Communication NFC message, the payment amount sent by the collection terminal.

21. The contactless payment apparatus according to claim 15, wherein the contactless payment apparatus further comprises:
a configuration unit, configured to: configure application identifiers of the at least two default contactless payment applications to be in a proximity payment system environment PPSE; or
configure the application identifier of the first default payment application to be in the PPSE.

22. A contactless payment apparatus, applied to a collection terminal, wherein the contactless payment apparatus comprises:
a sending unit, configured to send a payment amount to a payment terminal;
a receiving unit, configured to receive an application identifier that is of a first default payment application and sent by the payment terminal, wherein there are at least two default contactless payment applications on the payment terminal, each default contactless payment application is corresponding to one limit interval, at least two limit intervals corresponding to the at least two default contactless payment applications are consecutive and non-overlapping, and the first default payment application is obtained by determining, by the payment terminal after obtaining the payment amount of a transaction, a default contactless payment application corresponding to a limit interval within which the payment amount falls; and
a transaction unit, configured to complete the transaction with the payment terminal by using the payment application corresponding to the application identifier.

23. The contactless payment apparatus according to claim 22, wherein the sending unit comprises:
a first receiving module, configured to receive first membership card information sent by the payment terminal;
a first query module, configured to query a preset relationship between a membership card application and membership card information according to the first membership card information, to obtain a first membership card application corresponding to the first membership card information; and
a first sending module, configured to send the payment amount to the first membership card application on the payment terminal, so that the payment terminal obtains the payment amount from the first membership card application.

24. The contactless payment apparatus according to claim 22, wherein there are two default contactless payment applications on the payment terminal, each default contactless payment application is corresponding to one limit interval, two limit intervals corresponding to the two default contactless payment applications are consecutive and non-overlapping, the two limit intervals corresponding to the two default contactless payment applications are obtained by means of dividing by using a first demarcation limit value, and there is a second membership card application on the payment terminal; and
the sending unit comprises:
a second receiving module, configured to receive second membership card information and the first demarcation limit value that are sent by the payment terminal;
a second query module, configured to query a preset relationship between a membership card application and membership card information when an accumulated amount is greater than the first demarcation limit value, to obtain the second membership card application corresponding to the second membership card information; and
a second sending module, configured to send the accumulated amount to the second membership card application on the payment terminal by using the accumulated amount as the payment amount, so that the payment terminal obtains the payment amount from the second membership card application.

25. The contactless payment apparatus according to any one of claims 22 to 24, wherein the sending unit comprises:
a third sending module, configured to: send the payment amount to the payment terminal by using a next generation system environment NGSE message; or
send the payment amount to the payment terminal by using a Near Field Communication NFC message.

26. A contactless payment apparatus, applied to a collection terminal, wherein the contactless payment apparatus comprises:
a first obtaining unit, configured to obtain a payment amount of a transaction;
a receiving unit, configured to receive application identifiers that are of at least two default contactless payment applications and sent by a payment terminal, wherein there are the at least two default contactless payment applications on the payment terminal, each default contactless payment application is corresponding to one limit interval, and limit intervals corresponding to the at least two default contactless payment applications are consecutive and non-overlapping;
a second obtaining unit, configured to obtain an application identifier of a first default payment application according to the application identifiers of the at least two default contactless payment applications, wherein the first default payment application is a default contactless payment application corresponding to a limit interval within which the payment amount falls; and
a transaction unit, configured to complete the transaction with the payment terminal by using the payment application corresponding to the application identifier.

27. The contactless payment apparatus according to claim 26, wherein the second obtaining unit comprises:
an obtaining module, configured to obtain the limit intervals corresponding to the at least two default contactless payment applications; and
a first using module, configured to use, as the application identifier of the first default payment application according to a preset correspondence between an application identifier of a contactless payment application and a limit interval, an application identifier of the default contactless payment application corresponding to the limit interval within which the payment amount falls.

28. The contactless payment apparatus according to claim 26, wherein the second obtaining unit comprises:
a first determining module, configured to determine, according to the application identifiers of the at least two default contactless payment applications, bank card types corresponding to the at least two default contactless payment applications;
a second determining module, configured to determine, according to a preset correspondence between a bank card type and a limit interval, a bank card type corresponding to the limit interval within which the payment amount falls; and
a second using module, configured to use an application identifier corresponding to the determined bank card type as the application identifier of the first default payment application according to the determined bank card type.

29. A contactless payment system, wherein the contactless payment system comprises a payment terminal and a collection terminal;
the payment terminal comprises the contactless payment apparatus according to any one of claims 15 to 21; and
the collection terminal comprises the contactless payment apparatus according to any one of claims 22 to 25.

30. A contactless payment system, wherein the contactless payment system comprises a payment terminal and a collection terminal; and
the collection terminal comprises the contactless payment apparatus according to any one of claims 26 to 28.
